# EUROPÄISCHE PATENTSCHRIFT

(11) **EP 1 393 146 B1**
(45) Veröffentlichungstag und Bekanntmachung des Hinweises auf die Patenterteilung: **03.01.2007**
(21) Anmeldenummer: 02722085.4
(22) Anmeldetag: 15.02.2002
(51) Int. Cl.: G06F 1/00

(54) **VERFAHREN UND SYSTEM ZUR VERTEILTEN ERSTELLUNG EINES PROGRAMMS FÜR EINEN PROGRAMMIERBAREN, TRAGBAREN DATENTRÄGER**
METHOD AND SYSTEM FOR THE DISTRIBUTED CREATION OF A PROGRAM FOR A PROGRAMMABLE PORTABLE DATA CARRIER
PROCEDE ET SYSTEME DE PRODUCTION REPARTIE D'UN PROGRAMME POUR UN SUPPORT DE DONNEES PORTATIF PROGRAMMABLE

(30) Priorität: 22.02.2001 DE 10108487
(43) Veröffentlichungstag der Anmeldung: 03.03.2004
(73) Patentinhaber: Giesecke & Devrient GmbH, 81677 München (DE)
(72) Erfinder: GOLLNER, Michael, 81549 München (DE); CIESINGER, Daniel, 80637 München (DE)
(74) Vertreter: Klunker . Schmitt-Nilson . Hirsch
(86) Internationale Anmeldenummer: PCT/EP2002/001655
(87) Internationale Veröffentlichungsnummer: WO 2002/069118

(56) Entgegenhaltungen:
- EP-A- 0 464 526
- EP-A- 0 778 522
- US-A- 5 313 635
- US-A- 6 005 942
- HUSEMANN D: "Standards in the smart card world" COMPUTER NETWORKS, ELSEVIER SCIENCE PUBLISHERS B.V., AMSTERDAM, NL, Bd. 36, Nr. 4, 16. Juli 2001 (2001-07-16), Seiten 473-487, XP004304910 ISSN: 1389-1286

## Beschreibung

Die Erfindung betrifft die manipulationssichere Erstellung von ausführbarem Programmcode für programmierbare tragbare Datenträger, vorzugsweise in Gestalt von Chipkarten.

Aus der US-A-6,023,565 ist ein Verfahren zur verteilten Erstellung eines Programmes für einen programmierbaren Logikschaltkreis bekannt. Einem Nutzer, der mittels eines bei ihm befindlichen Computers ein Programm für einen derartigen Schaltkreis erstellen möchte, wird danach vom Hersteller der Schaltkreise eine einfach bedienbare Nutzerschnittstelle bereitgestellt. Damit beschreibt der Nutzer auf seinem Computer die für den Logikschaltkreis gewünschte Funktionalität. Die Beschreibung erfolgt menügeführt über Eingabemasken, mittels derer vorbereitete Parameter festgelegt werden. Der resultierende, die gewünschte Schaltkreisfunktionalität beschreibende Parameterdatensatz wird über ein Datennetz an einen Computer des Schaltkreisherstellers gesandt. Dieser compiliert den Parameterdatensatz und erzeugt ein lauffähiges Programm mit der vom Nutzer gewünschten Funktionalität. Das lauffähige Programm sendet der Hersteller zurück an den Computer des Nutzers, welcher es in eine Programmierungsbefehlsfolge umsetzt und diese an den Logikschaltkreis überträgt. Indem die Programmerstellung auf das dialoggeführte Eingeben von Parametern reduziert ist, ermöglicht das Konzept auch Nutzern ohne weitreichende Programmierkenntnisse die Erstellung von Programmen für Logikschaltkreise. Eine Programmerstellung ist dabei möglich, ohne daß der Nutzer über eine Compilersoftware verfügt. Das Konzept stellt darauf ab, die Anwendungsfreundlichkeit eines strukturbedingt schwer handzuhabenden technischen Systems zu verbessern. Vorkehrungen zum Schutz der zwischen den beteiligten Computern ausgetauschten Daten gegen Manipulation werden nicht getroffen. Das Konzept eignet sich deshalb nicht für Anwendungen, in denen es besonders auf einen Schutz der erzeugten Programmdaten gegen Ausforschung und Manipulation ankommt. Insbesondere eignet es sich in der beschriebenen Form nicht zur Erstellung von Programmen für Chipkarten, mittels derer sicherheitsrelevante Transaktionen, etwa Bankgeschäfte, ausgeführt werden sollen.

Aus der US 6,005,942 ist ein Verfahren zum sicheren Einbringen einer lauffähigen Applikation auf eine bereits im Feld befindliche Chipkarte bekannt. Das Verfahren ermöglicht es Applikationsanbietern, unter Einschaltung des Kartenherausgebers zu beliebigen Zeitpunkten während des Lebenszyklus einer Chipkarte weitere Applikationen auf eine Karte zu bringen. Das nachträgliche Laden einer lauffähigen Applikation wird mittels einer speziellen Kartendomain-Routine ermöglicht, die dem Herausgeber der Karte zugeordnet ist und die Schlüssel und kryptographische Mechanismen verwaltet. Die Kartendomain-Routine wird unterstützt von Sicherheitsroutinen, die ebenfalls Schlüssel und kryptographische Mechanismen verwalten, welche aber dem Applikationsanbieter zugeordnet sind und nachzuladende Applikationen gegenüber dem Kartenherausgeber sichern. Nachzuladende Applikationen sind verschlüsselt, werden von der Kartendomain-Routine mit Unterstützung der Sicherheitsroutinen entschlüsselt und in die Karte geladen. Beim Laden erfolgt die Prüfung einer kryptographischen Signatur. Auf die Erstellung der nachzuladenden Applikationen ausgehend von einem Applikationsprogrammquelltext geht die Schrift nicht ein.

Aus der EP 778 522 A2 ist ein Vorschlag zur Erstellung von hardwarespezifischem Programmcode auf einer Computerplattform, die ursprünglich nur zur Ausführung und Erstellung von architekturneutralem Programmcode eingerichtet ist, wie insbesondere JAVA-Maschinen, bekannt. Dem Vorschlag liegt die Erkenntnis zugrunde, daß sich hardwarespezifische Umsetzungen von lauffähigem, architektumeutralem Programmcode für Einzelanwender in der Regel nicht lohnen. Die Umsetzungen sollen deshalb auf speziellen, zentralen Compilierung-Servern durchgeführt werden, denen der umzusetzende neutrale Programmcode hierzu übersandt wird. Der zwischen Anwender und Server ablaufende Datenaustausch erfolgt dabei signaturgesichert. Eingesetzt werden sollen insbesondere eine Signatur der Instanz, die den ursprünglichen Programmcode erstellt hat, eine Signatur des eingesetzten Compilers sowie eine Signatur des zentralen Compilierungsservers, bei dem die Compilierung vorgenommen wurde. Die beschriebene Lösung ist für eine Nutzung im Bereich der Chipkarten nur bedingt geeignet, da sie voraussetzt, daß dem Endanwender alle Mittel zur Erstellung grundsätzlich lauffähiger Kartenprogramme zur Verfügung stehen. Dies ist aus Sicherheitsgründen unerwünscht.

Aus der WO 99/12307 ist ein Verfahren zur Verteilung von kommerzieller Software ausgehend von einem Softwarehersteller über Zwischenhändler an Endabnehmer bekannt. Beschrieben wird eine Methode, die es den Zwischenhändlern erlaubt, einer zu verteilenden Software Zusatzinformationen hinzuzufügen, ohne daß die Sicherheit des ausführbaren Kerncodes der zu verteilenden Software dabei beeinträchtigt wird. Erreicht wird dies durch eine spezielle Versenderoutine, die eine zu verteilende Software verschlüsselt und mit einer besonderen Verteilungsinformationstabelle versieht. Nur in der letzteren können die Zwischenhändler Änderungen vornehmen oder Ergänzungen anbringen.

Aus der US 5,313,635 A ist desweiteren eine effektive Compileranordnung in einem Computernetzwerk bekannt. Um eine unnötige Bereithaltung gleichartiger Compiler zu vermeiden, werden in einem Netz vorhandene Compiler mittels einer Tabelle verwaltet, welche jedem Compiler jeweils eine damit kompilierbare Quelltextsprache zuordnet. Nach Erhalt eines Compilierungsauftrages ermittelt ein zentraler Server eine geeignete Maschine und übermittelt diese dem zu complierenden Quelltext.

Chipkarten, die das Nachladen von ausführbaren Programmcode erlauben, sowie die Einbringung nachzuladenden Programmcodes in Chipkarten sind z.B. im "Handbuch der Chipkarten" von W. Rankl, W. Effing, Hansa Verlag München, 3. Auflage, beschrieben. Die Programmerstellung erfolgt danach vollständig auf einem Hintergrundsystem. Der erstellte ausführbare Programmcode wird über eine, z.B. durch eine gegenseitige Authentisierung gesicherte Schnittstelle auf die Chipkarte übertragen. Aus Sicherheitsgründen erfolgt die Einbringung des ausführbaren Programmcodes auf die Chipkarte vorzugsweise online, nachdem zuvor eine eindeutige Identifizierung und Zuordnung von Hintergrundsystem, Schnittstellen, Kartenbetriebssystem und Kartenmikroprozessor erfolgt ist. Um bei Wahrung einer höchstmöglichen Sicherheit die Verwaltbarkeit der die Identifikationsinformationen enthaltenden Datenbanken der Hintergrundsysteme zu gewährleisten, werden die Genehmigungen zur Erstellung von ausführbaren Programmcode auf Hintergrundsystemen von den Kartenherausgebern nur unter Auflagen erteilt und werden die erteilten Genehmigungen gelistet. Die grundsätzlich geschaffene Möglichkeit, ausführbaren Programmcode für Chipkarten selbst zu erstellen, wird dadurch beschränkt.

Zur Sicherung eines über ein offenes Datennetz geführten Datenaustausches zwischen zwei Computern ist eine Anzahl von auf unterschiedlichen Verschlüsselungstechniken beruhenden Methoden bekannt, u.a. das SSL (Secure Socket Layer) Protokoll, PGP (Pretty Good Privacy), das Secure Messaging oder das SMIME-Protokoll. Methoden dieser Art werden auch in dem nachfolgend beschriebenen, erfindungsgemäßen Verfahren genutzt, sind aber an sich nicht Gegenstand der Erfindung. Zu den Ausführungsdetails einschließlich der kryptologischen Realisierung wird deshalb allgemein auf die vielfältig verfügbaren Beschreibungen der jeweiligen Methoden in der einschlägigen Literatur sowie im Internet verwiesen. Dasselbe gilt für die üblichen im Zusammenhang mit Datensicherungsverfahren eingesetzten Mittel wie etwa die Verschlüsselung gemäß dem 3DES-Verfahren oder die Bildung von Message Authentication Codes (MAC).

Der Erfindung liegt die Aufgabe zugrunde, ein Verfahren anzugeben, das es bei Wahrung größtmöglicher Sicherheit gegen Datenmanipulation gestattet, einem möglichst großen Kreis von Nutzern die Erstellung von ausführbaren Programmen für programmierbare tragbare Datenträger zu erlauben. Aufgabe der Erfindung ist es weiterhin, die zur Ausführung des Verfahrens nötigen Systemkomponenten anzugeben.

Die Aufgabe wird gelöst durch ein Verfahren mit den Merkmalen des Hauptanspruchs. Erfindungsgemäß werden einem Nutzer ein Programmeditor zur Erstellung von Programmquelltexten sowie ein vorkomplettierter tragbarer Datenträger zur Verfügung gestellt, der über Softwarewerkzeuge zur Endbearbeitung verfügt, welche die Umwandlung von in einem Übergangsformat vorliegendem Transportcode in ausführbaren Programmcode erlauben. Die Erstellung eines ausführbaren Programmes für den Datenträger erfolgt verteilt. Mit dem Programmeditor erstellt der Nutzer einen Programmquelltext, der nachfolgend über eine gesicherte Verbindung an einen beim Herausgeber des Datenträgers befindlichen Computer übermittelt wird. Die gesicherte Verbindung kann dabei hergestellt werden, indem ein Programmquelltext von dem vorkomplettierten Datenträger selbst zu einem Transportcode verschlüsselt und so gegen Veränderung gesichert wird, daß nur ein bestimmter, über einen bei einem Herausgeber des Datenträgers befindlichen Computer adressierter Empfänger den Transportcode entschlüsseln und auf Integrität überprüfen kann.

Aus dem eingegangenen Programmquelltext erzeugt der beim Herausgeber des Datenträgers befindliche Computer durch Kompilieren und Linken einen ausführbaren Programmcode. Bestandteil des Kompilier- und Linkvorganges ist eine formale Verifikation der erzeugten Programmcodes, durch die insbesondere aggressiver Code ermittelt wird. Den verifizierten, ausführbaren Programmcode setzt der beim Herausgeber des Datenträgers befindliche Computer in ein Übergangsformat um und übermittelt dieses über den Computer des Nutzers an den vorkomplettierten, tragbaren Datenträger. Dieser überführt ihn mit Hilfe der Endbearbeitungsoftwarewerkzeuge wieder in ausführbaren Programmcode und übernimmt diesen in seinen Speicher. Erfindungsgemäß erfolgt die Überführung in das Übergangsformat durch eine Verschlüsselung, die nur mittels der auf dem vorkomplettierten Datenträger enthaltenen Softwarewerkzeuge wieder aufhebbar ist. Dabei werden im vorkomplettierten Datenträger die Entschlüsselung und/ oder die Feststellung der Authentizität und/oder der Integrität eines einen Programmcode enthaltenden Transportcodes ausgeführt, bevor im fehlerfreien Fall der resultierende, ausführbare Programmcode in den Speicher des Datenträgers abgelegt wird.

Das erfindungsgemäße Verfahren schafft eine sichere "Ende-zu-Ende"-Verbindung zwischen einem bei einem Herausgeber befindlichen Computer und einem Datenträger über einen bei einem Nutzer befindlichen Computer. Durch die Gestaltung der Vorkomplettierung und die Wahl der Softwarewerkzeuge läßt es sich dabei leicht an den Typ und die technischen Möglichkeiten der jeweils gegebenen Datenträger anpassen. Sind die Datenträger nur für die Ausführung von symmetrischen Verschlüsselungsverfahren eingerichtet, erfolgt die Herstellung einer gesicherten "Ende-zu-Ende"-Verbindung zweckmäßig durch Verwendung eines symmetrischen kartenindividuellen Schlüssels einerseits, und einer überlagerten, vereinfachten asymmetrischen Verschlüsselung auf der Datenverbindung zwischen dem Computer des Nutzers und dem beim Herausgeber des Datenträgers befindlichen Computer andererseits. In einer alternativen Ausführung erfolgt zur Sicherung der Datenübertragung zwischen dem Computer des Nutzers und dem beim Herausgeber des Datenträgers befindlichen Computer eine asymmetrische Verschlüsselung mit wechselseitiger Authentifizierung und wird die gesicherte "Ende-zu-Ende"-Verbindung zwischen dem beim Herausgeber befindlichen Computer und dem Datenträger mit den Mechanismen des Secure-Messaging eingerichtet.

Sind die Datenträger für die Ausführung von asymmetrischen Verschlüsselungsverfahren eingerichtet, wird zweckmäßig zwischen dem beim Herausgeber des Datenträgers befindlichen Computer und dem Datenträger direkt eine durch asymmetrische Verschlüsselung gesicherte "Ende-zu-Ende"-Verbindung ausgebildet. Der Computer des Nutzers fungiert dabei lediglich als Mittler.

Das erfindungsgemäße Verfahren hat den Vorteil, daß die Erstellung von ausführbaren Programmen für einen Datenträger grundsätzlich beliebigen Nutzern überlassen werden kann, ohne daß die Identität des Nutzers festgestellt und verwaltet werden müßte. Da der Herausgeber der Datenträger in jede Programmerstellung einbezogen wird, ist die Sicherheit der erzeugten Programme und darüber des gesamten Systems stets gewährleistet. Weil insbesondere die Compilerfunktionalität beim Herausgeber der Datenträger verbleibt, muß wichtiges und sicherheitsrelevantes Know-How nicht an die Nutzer übergeben werden.

Durch Gestaltung der Compilerfunktionalität derart, daß direkte, unverschlüsselte Zugriffe auf von Nutzern stammende Programmquelltexte oder erzeugte ausführbare Programmcodes blockiert werden, läßt sich umgekehrt sicherstellen, daß anwendungsspezifisches Know-How der Nutzer vor dem Herausgeber geschützt wird. Zweckmäßig wird hierzu in dem beim Herausgeber befindlichen Computer ein Hardware-Sicherheitsmodul eingesetzt, in dem die Compilerfunktionalität, die Ver-/Entschlüsselung von Programmen, die Prüfung/Erstellung von Signaturen sowie die Authentisierung ausgeführt werden. Außerhalb des Hardware-Sicherheitsmodules erscheinen Programmquelltexte oder ausführbare Programmcodes nur in verschlüsselter Form.

Durch die formale Verifikation neu erstellter Programme beim Herausgeber, d.h. in sicherer Umgebung, kann ferner sehr zuverlässig die Einbringung aggressiver Programmcodes in mittels eines Datenträgers nutzbare Systeme verhindert werden. Zudem ergibt sich der Vorteil, daß alle erstellten ausführbaren Programme mit dem jeweils aktuellsten Compiler kompiliert werden. Das erfindungsgemäße Verfahren kann dabei online oder offline ausgeführt werden. Für die Herausgeber von Datenträgern eröffnet das erfindungsgemäße Verfahren sogar die Möglichkeit, die Erstellung der jeweils gewünschten lauffähigen Anwendungsprogramme gänzlich den Nutzern zu überlassen und die Datenträger überhaupt nur in vorkomplettierter Form auszuliefern. Die durch die verteilte Programmerstellung stets erzwungene Einbindung des Herausgebers in eine Programmerstellung ermöglicht desweiteren die Einführung von Nutzungsmethoden, die Gebührenmodelle verwenden, welche z.B. auf der Zahl oder der Art der auf einen Datenträger gebrachten ausführbaren Programme beruhen.

Ein Ausführungsbeispiel der Erfindung wird nachfolgend unter Bezugnahme auf die Zeichnung näher erläutert.

Es zeigen:
- Fig.1: ein System zur Ausführung einer Programmerstellung,
- Fig. 2: die Struktur des integrierten Schaltkreises eines programmierbaren, tragbaren Datenträgers,
- Fig. 3: die Struktur eines zweiten Computers,
- Fig. 4: den grundlegenden Ablauf einer verteilten Programmerstellung,
- Fig. 5 bis 7: Flußdiagramme zur Veranschaulichung des Ablaufes einer Programmerstellung,
- Fig. 8: das Prinzip einer Online-Prüfung eines erstellten Programmes auf Lauffähigkeit.

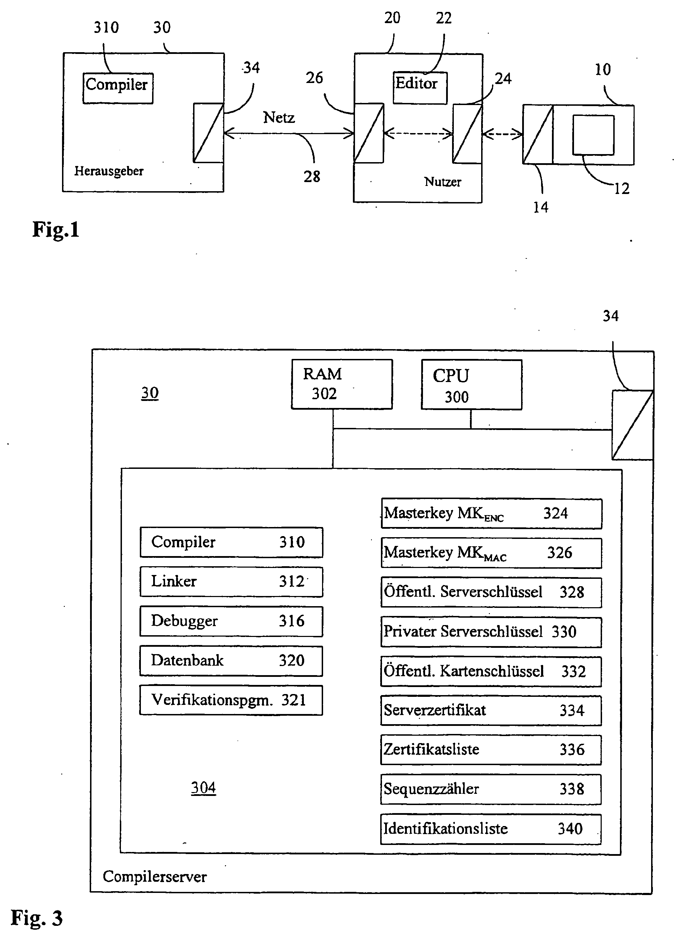

Fig.1 veranschaulicht die grundlegende Struktur eines Systems zur verteilten Erstellung eines Programmes für einen programmierbaren, tragbaren Datenträger. Ein erster, für einen Datenaustausch mit einem tragbaren Datenträger 10 ausgebildeter Computer 20 ist über eine Datenverbindung 28 mit einem zweiten Computer 30 verbunden.

Der erste Computer 20 befindet sich bei einem Nutzer, etwa bei einer Bank, einer Versicherung, einem Einzelhändler, einer medizinischen Einrichtung oder dergleichen oder bei einem Dienstleister, der im Auftrag der vorgenannten Einrichtungen Programme erstellt. Er besitzt eine erste, kontaktierend oder berührungslos arbeitende Schnittstelle 24, die z.B. als Kontaktfeld, in Form einer Spule oder als optischer Signalgeber realisiert sein kann und die einen Datenaustausch mit einem tragbaren Datenträger 10 ermöglicht. Über eine weitere Schnittstelle 26 ist er an eine Datenverbindung 28 angeschlossen. Über beide Schnittstellen 24, 26 verbindet der Nutzercomputer 20 den Datenträger 10 mit der Datenverbindung 28. Der Nutzercomputer 20 stellt dem Datenträger 10 dabei Zusatzfunktionen bereit. Insbesondere gestattet er den Betrieb eines, im folgenden kurz Editor genannten, Editierungsprogrammes 22, das die Erstellung von Quelltexten von Programmen für einen Datenträger 10 erlaubt.

Für den programmierbaren, tragbaren Datenträger 10 wird anschließend die Form einer Chipkarte zugrundegelegt. Auf diese Erscheinungsform ist er aber keineswegs beschränkt. Der Datenträger 10 kann vielmehr, angepaßt an die jeweilige Nutzung, auch anders ausgebildet sein, etwa in Gestalt einer Uhr, als Schreibmittel usw. Unabhängig von seiner konkreten Erscheinungsform besitzt der tragbare Datenträger 10 jeweils eine zur Schnittstelle 24 des Nutzercomputers 20 korrespondierende Schnittstelle 14, welche einen Datenaustausch mit einem Nutzercomputer 20 ermöglicht. Desweiteren besitzt der tragbare Datenträger 10 einen integrierten Schaltkreis 12, welcher eine zentrale Prozessoreinheit sowie einen Speicher zur Aufnahme des Programmcodes wenigstens eines durch die zentrale Prozessoreinheit ausführbaren Anwendungsprogrammes aufweist.

Der zweite Computer 30 befindet sich typischerweise bei einem Herausgeber von tragbaren Datenträgern 10 oder bei einem autorisierten Betreiber des hier beschriebenen Verfahrens. In der Regel besitzt er eine im Vergleich zu der des Nutzercomputer 20 bzw. des tragbaren Datenträgers 10 wesentlich größere Rechenleistung. Der zweite Computer 30 muß dabei nicht als bauliche Einheit realisiert sein. Er kann vielmehr auch als System mit verteilten Komponenten ausgeführt sein, welche über ein spezielles Datennetz verbunden sind. Zur Speicherung bzw. zur Ausführung sicherheitskritischer Funktionen können Hardware-Sicherheitsmodule eingesetzt sein. Über eine Schnittstelle 34 ist der zweite Computer 30 an die Datenverbindung 28 angeschlossen. Der zweite Computer 30 ist insbesondere dazu ausgebildet, ein Kompilierungsprogramm 310 zur Umsetzung eines in einer Programmierhochsprache vorliegenden Quelltextprogrammes in Maschinensprache auszuführen; er wird deshalb nachfolgend als Compilerserver bezeichnet.

Die Datenverbindung 28 hat üblicherweise die Gestalt eines Datennetzes und kann insbesondere durch das Internet realisiert sein. Obwohl in Fig.1 nur eine Verbindung zwischen zwei Komponenten 20, 30 gezeigt ist, können über die im folgenden Datennetz genannte Datenverbindung 28 auch mehrere Nutzercomputer 20 mit einem oder auch mehreren Compilerservern 30 verbunden sein.

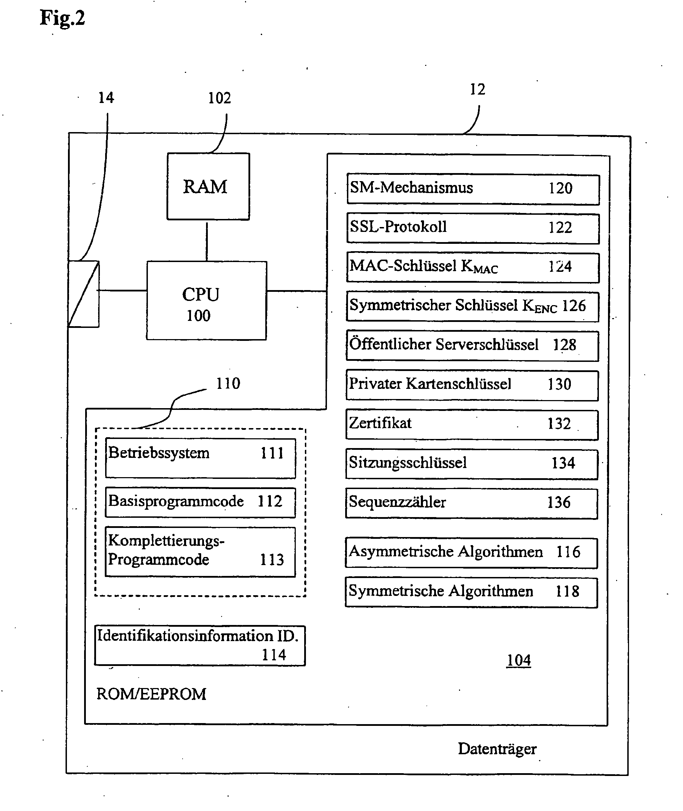

Fig. 2 zeigt die Struktur des integrierten Schaltkreises 12 einer Chipkarte 10 mit als Vorkomplettierung aufgebrachten Softwarewerkzeugen. Der integrierte Schaltkreis 12 besitzt eine für Chipkartenprozessoren typische Architektur und weist eine zentrale Prozessoreinheit 100, einen flüchtigen Arbeitsspeicher 102, sowie eine nichtflüchtige Speicheranordnung 104 auf, letztere bestehend aus einem nichtflüchtigen Nur-Lese-Speicher sowie einem nichtflüchtigen, wiederbeschreibbaren Speicher. Üblicherweise ist der flüchtige Arbeitsspeicher 102 ein RAM-Speicher, der nichtflüchtige Nur-Lese-Speicher ein ROM-Speicher und der nichtflüchtige, überschreibbare Speicher ein EEPROM-Speicher. Außer diesen genannten können beliebige andere, dieselbe Funktionalität aufweisenden Speichertypen eingesetzt werden. Die zentrale Prozessoreinheit 100 ist ferner mit der Schnittstelle 14 verbunden.

In der nichtflüchtigen Speicheranordnung 104 befindet sich eine Anzahl von zur Nutzung des Datenträgers 10 benötigten Softwarewerkzeugen, welche in einer Vorkomplettierungsphase vor Übergabe des Datenträgers 10 an einen Nutzer angelegt werden. Unter Softwarewerkzeugen sollen hierbei alle nicht durch einen Nutzer veränderbaren Programme, Routinen oder Datensätze verstanden werden, die bedarfsweise zur Ausführung jeweils bestimmter Datenverarbeitungsaufgaben einsetzbar sind. Im Rahmen der Vorkomplettierung angelegt wird dabei zum einen eine ausführungsunabhängige, stets gleichartige Kartengrundausstattung 110. Sie umfaßt zumindest das Betriebssystem 111, einen Basisprogrammcode 112 zur Realisierung von Anwendungen, die sich bereits bei Übergabe an den Nutzer auf der Chipkarte 10 befinden, sowie einen Speicherbereich 113 zur späteren Aufnahme von nachgeladenem, ausführbarem Programmcode.

Zum anderen wird eine auf die jeweils gewählte Ausführungsvariante abgestimmte Auswahl der folgenden Softwarewerkzeuge angelegt: eine für den integrierten Schaltkreis 12, und damit für die Chipkarte 10, individuelle und eindeutige Identifikationsinformation 114, z.B. eine Seriennummer, ein Programm 116 zur Ausführung asymmetrischer kryptographischer Algorithmen, ein Programm 118 zur Durchführung symmetrischer kryptographischer Algorithmen, ein Programm 120 zur Führung eines Datenaustausches nach dem Prinzip des Secure Messagings, ein Programm 122 zur Durchführung eines Datenaustausches über das Datennetz 28 gemäß dem SSL-Protokoll, ein chipkartenindividueller Signaturschlüssel 124, ein chipkartenindividueller symmetrischer Schlüssel 126, der öffentliche Schlüssel 128 eines der Chipkarte 10 zugeordneten Compilerservers 30, ein privater Kartenschlüssel 130 zur Verwendung in einem asymmetrischen Verschlüsselungsverfahren, ein Zertifikat 132, welches die Zusammengehörigkeit zwischen öffentlichen Kartenschlüsseln und Identifikationsinformationen mit einer Signatur eines Herausgebers bestätigt, Speicherraum zur Aufnahme eines Sitzungssschlüssel 134 - dieser wird im Unterschied zu den vorgenannten Schlüsseln bei der Aufnahme eines Datenaustausches mit einem Compilerserver 30 jeweils neu erzeugt, sowie ein Sequenzzähler 136. Alle genannten Softwarewerkzeuge können jeweils auch mehrfach vorhanden sein. Das gilt besonders für die aufgeführten Schlüssel, Zertifikate und den Sequenzzähler.

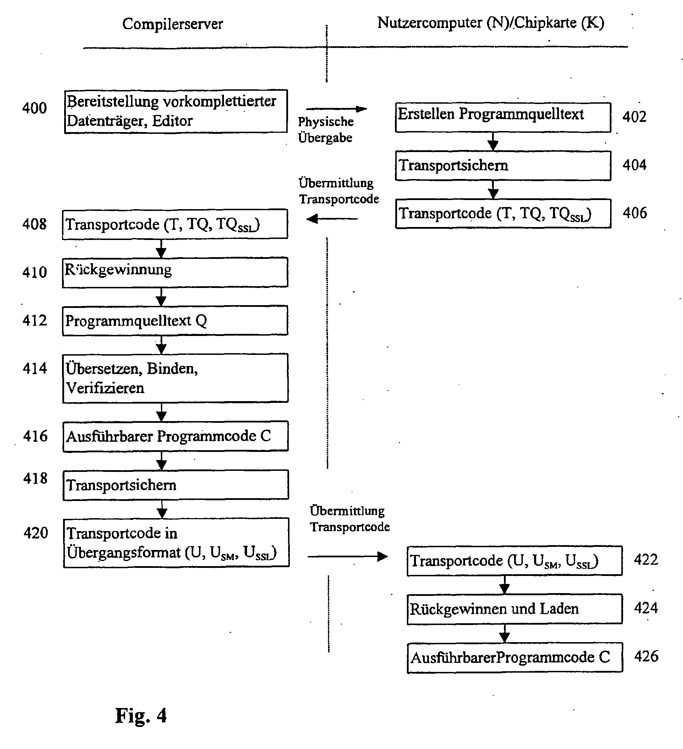

Fig. 3 veranschaulicht die Struktur eines Compilerservers 30 mit den bei der Durchführung einer Programmerstellung eingesetzten Programmen und Softwarewerkzeuge. Kern des Compilerservers 30 bildet eine zentrale Prozessoreinheit 300, welche über eine Schnittstelle 34 mit dem Datennetz 28 verbunden ist, um darüber einen Datenaustausch mit einem Nutzercomputer 20 und darüber mit einer Chipkarte 10 zu führen. Weiter sind der zentralen Prozessoreinheit 300 ein flüchtiger Arbeitsspeicher 302, in der Regel in Gestalt eines RAM-Speichers, sowie eine nichtflüchtige Speicheranordnung 304 zugeordnet, welche üblicherweise einen Nur-Lese-ROM-Speicher sowie einen Massenspeicher, etwa eine Festplatte, umfaßt.

In der Speicheranordnung 304 sind die zur Durchführung des vorgeschlagenen Verfahrens benötigten Softwarewerkzeuge abgelegt. Fig. 3 zeigt der Einfachheit wegen eine Übersicht über sämtliche im Zusammenhang mit dieser Beschreibung in Betracht kommenden Softwarewerkzeuge. Die Auswahl der tatsächlich benötigten Softwarewerkzeuge hängt, wie bei der Chipkarte 10, von der zur Realisierung des Verfahrens konkret gewählten Ausführungsform. Allgemein können sich in der Speicheranordnung 304 an Softwarewerkzeugen befinden: Ein, in Fig. 3 Compiler genanntes Compilierungsprogramm 310 zur Umsetzung von Programmquelltext in einen Programmcode, ein, in Fig. 3 Linker genanntes Linkprogramm 312 zur Einbindung von bereits erstellten Programmcodes in den Kontext eines neu erstellten Programmes, eine Codebibliothek 318 mit dem Programmcode bereits vorhandener Programme und Programmteile, eine Datenbank 320 zur Ablage von bestimmten Nutzern zugeordneten Programmcodes, ein Debug-Programm 316 zur Prüfung eines erstellten Programmes auf Lauffähigkeit, ein Programm 321 zur formalen Verifikation von erzeugten Programmen und/oder Quelltexten, ein oder mehrere Hauptschlüssel 324, welche zu dem oder den chipkartenindividuellen, symmetrischen Schlüsseln 126 korrespondieren, ein oder mehrere Hauptschlüssel 326, welche zu den chipkartenindividuellen Schlüsseln 124 zur Bildung von Datensicherungscodes, insbesondere MACs korrespondieren, einen oder mehrere öffentliche Serverschlüssel 328 zur Durchführung von asymmetrischen kryptographischen Algorithmen, einen oder mehrere korrespondierende private Serverschlüssel 330, einen oder mehrere öffentliche Kartenschlüssel 332 zur Durchführung asymmetrischer Algorithmen, ein oder mehrere Serverzertifikate 334, ein oder mehrere Sequenzzähler 338, sowie eine Liste mit Zertifikaten, die bei der Herstellung der vorkomplettierten Chipkarte 10 gebildet wurden und in der Chipkarte 10 im Bereich 132 gespeichert werden. Desweiteren beinhaltet die Speicheranordnung 304 eine Nutzerliste 340 mit Identifikationsinformationen, die eine eindeutige Identifizierung einer Chipkarte ermöglichen; Identifikationsinformationen zur Identifizierung von Chipkarten 10 können beispielsweise deren Seriennummern sein.

Zweckmäßig werden in einem Compilerserver 30 bei der praktischen Umsetzung des Verfahrens von den vorgenannten Softwarewerkzeugen nur die tatsächlich benötigten eingerichtet, die jeweils nicht benötigten weggelassen.

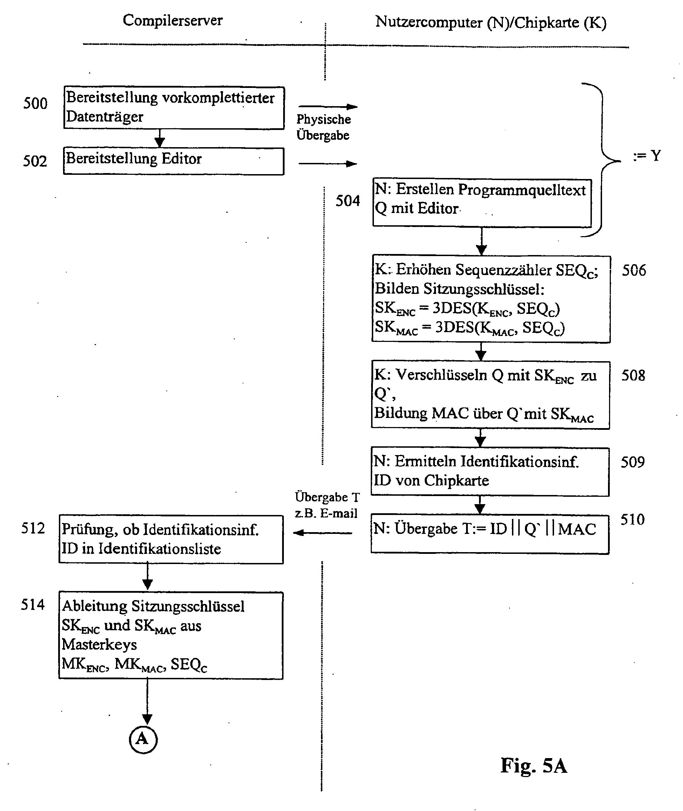

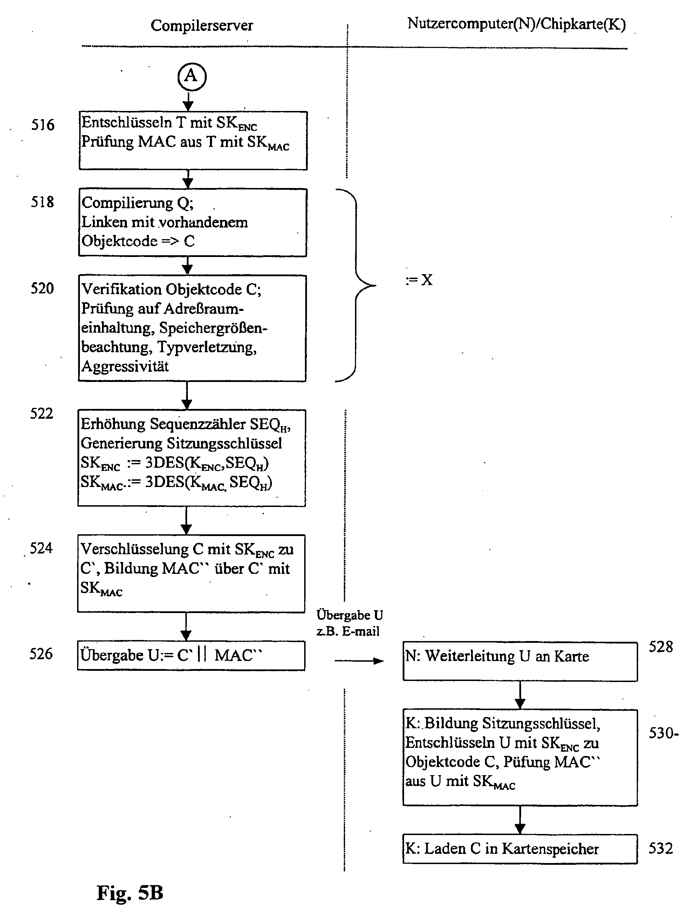

Bedeutung und Verwendung der in der vorkomplettierten Chipkarte 10 bzw. dem Compilerserver 30 vorhandenen Softwarewerkzeuge werden nachfolgend anhand der Fig. 4, die den grundlegenden Ablauf einer verteilten Programmerstellung zeigt, sowie der Fig. 5 bis 7 erläutert, die drei Ausführungsformen einer verteilten Programmerstellung veranschaulichen.

Fig. 4 zeigt zunächst den grundlegenden Ablauf einer verteilten Programmerstellung. In einer Vorbereitungsphase werden einem Nutzer eine durch Aufbringen von Softwarewerkzeugen vorkomplettierte Chipkarte 10 sowie ein Editor 22 zur Verfügung gestellt, Schritt 400. Mit dem Editor 22 erstellt er auf dem Nutzercomputer 20 einen Programmquelltext Q, Schritt 402. Durch Anwendung einer geeigneten Verschlüsselungstechnik wird dieser mit einer Transportsicherung versehen, Schritt 404, und in einen Transportcode T, TQ, TQ_{SSL} überführt, Schritt 406. Der Transportcode T, TQ, TQ_{SSL} wird an den Compilerserver 30 übermittelt; Schritt 408.

Der Compilerserver 30 hebt durch Entschlüsselung die Transportsicherung auf, Schritt 410, und gewinnt den in dem Transportcode T, TQ, TQssL enthaltenen Programmquelltext Q zurück, Schritt 412. Den Programmquelltext Q kompiliert, bindet und verifiziert er anschließend, Schritt 414. Es resultiert ein lauffähiger Programmcode C, Schritt 416, der nachfolgend wiederum transportgesichert wird, Schritt 418. Er wird hierzu durch Anwendung geeigneter Verschlüsselungsmechanismen, die nicht mit den zuvor auf Seiten des Nutzercomputers 20 angewandten übereinstimmen müssen, in ein Übergangsformat U, U_{SM}, U_{SSL} überführt, Schritt 420. In diesem Übergangsformat wird er über den Nutzercomputer 20 an die Chipkarte 10 übermittelt, Schritt 422.

Jene ermittelt unter Verwendung der bei der Vorkomplettierung angelegten Softwarewerkzeuge aus dem im Nutzercomputer 20 eingegangenen Transportcode U, U_{SM}, U_{SSL} durch Entschlüsselung wieder den lauffähigen Programmcode C und lädt diesen schließlich in seinen Speicher.

Fig. 5 zeigt eine verteilte Programmerstellung, bei der die Datensicherheit durch Nutzung von auf der Chipkarte 10 vorbereiteten Mitteln in Wechselwirkung mit dem Compilerserver 30 erreicht wird. Die in Fig. 5 dargestellte Ausführungsform eignet sich besonders für Systeme, in denen die verwendeten Chipkarten 10 nur symmetrische Verschlüsselungstechniken beherrschen.

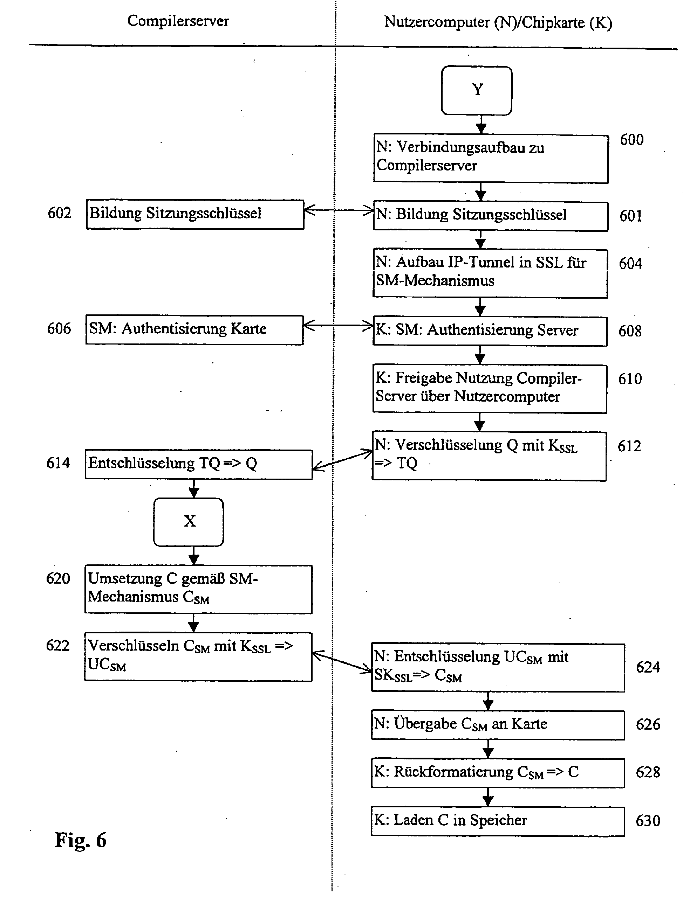

Fig. 6 zeigt eine Ausführungsform, bei der die zwischen Nutzercomputer 20 und Compilerserver 30 über das Datennetz 28 erfolgende Datenübertragung mittels eines SSL-Protokolls gesichert ist, während der direkt zwischen Chipkarte 10 und Compilerserver 30 erfolgende Datentransport gemäß dem Secure-Messaging Mechanismus ausgeführt wird. Die Ausführungsform eignet sich ebenfalls für Systeme, in denen die verwendeten Chipkarten 10 nur symmetrische Verschlüsselungstechniken erlauben.

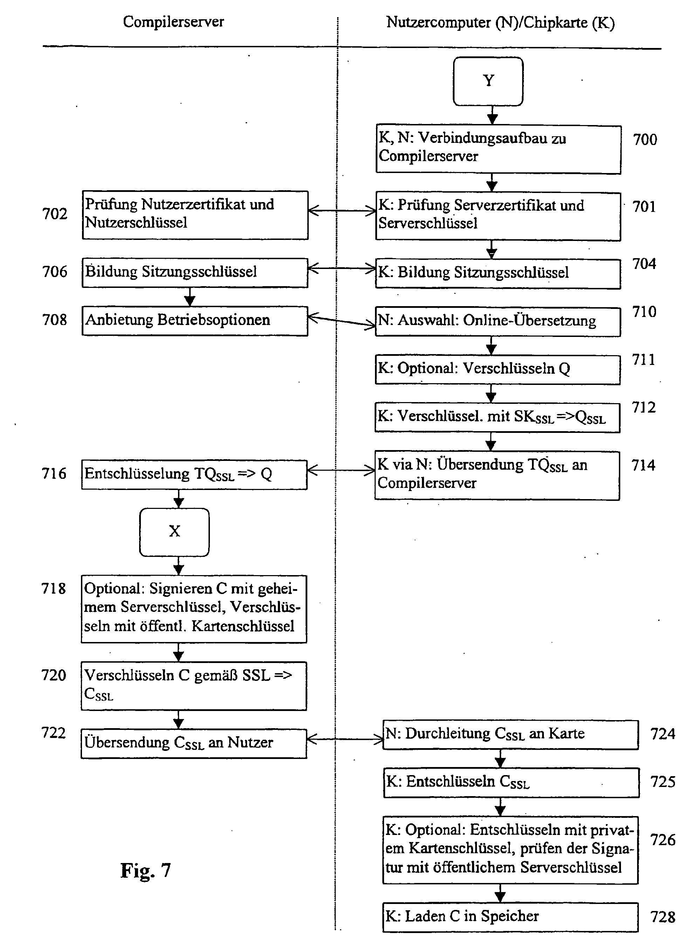

Fig.7 veranschaulicht eine Ausführungsform, bei der der Nutzercomputer 20 im wesentlichen nur als Mittler zwischen Chipkarte 10 und Compilerserver 30 wirkt. Die Sicherung der zwischen Chipkarte 10 und Compilerserver 30 transportierten Daten erfolgt, indem zwischen Compilerserver 30 und Chipkarte 10 unter Verwendung des SSL-Protokolls direkt eine gesicherte "Ende-zu-Ende"-Verbindung eingerichtet wird.

Tabelle 1 veranschaulicht systematisch die Anwendbarkeit der drei nachfolgend anhand der Fig. 5, 6, 7 beschriebenen Ausführungsformen in Abhängigkeit von der Durchführung der Datenübertragung, der Ausstattungsanforderungen an die Chipkarte 10 und der Art der Transportsicherung.

**Tabelle 1**

| Verfahren | Datenübertragung | Anforderung an Chipkarte | Art der Transportsicherung |
|---|---|---|---|
| Fig 5 | Offline | Nur symmetrische Algorithmen | Verschlüsselung und MAC durch Chipk. |
| Fig. 6 | Online | Symmetrische und/oder asymmetrische Algorithmen | Secure Messaging durch Chipkarte |
| Fig. 7 | Online | Symmetrische und asymmetrische Algorithmen | SSL durch Chipkarte |

Die linke Spalte in den Fig. 5, 6, 7 zeigt jeweils die Aktivitäten des Compilerservers 30, die rechte die Aktivitäten des Nutzercomputers 20 bzw. der Chipkarte 10, wobei "N" den Nutzercomputer 20 bezeichnet, "K" die Chipkarte 10.

Der in Fig.5 dargestellten Programmerstellung vorgeschaltet ist eine Vorbereitungsphase. Darin werden dem Nutzer durch den Herausgeber eine vorkomplettierte Chipkarte 10, Schritt 500, sowie ein Editor 22 zur Einrichtung auf seinem Computer 20, Schritt 502, bereitgestellt. Auf der vorkomplettierten Chipkarte 10 befinden sich bzw. sind neben der Grundausstattung 113 eingerichtet: eine Identifikationsinformation ID im Speicherbereich 114, ein Programm 118 zur Durchführung von symmetrischen Kryptoalgorithmen, etwa des "3DES"-Algorithmus, mindestens ein kartenindividueller Schlüssel K_{MAC} zur Bildung eines Datensicherungscodes, vorzugsweise in Gestalt eines MACs, im Speicherbereich 124, mindestens ein Schlüssel K_{ENC} zur symmetrischen Verschlüsselung im Speicherbereich 126, sowie Speicherplatz 134 zur Aufnahme wenigstens zweier Sitzungsschlüssel SK_{ENC}, SK_{MAC}. Weiter sind auf der vorkomplettierten Chipkarte 10 wenigstens zwei Sequenzzähler 136 mit Werten SEQ_{C}, SEQ_{H}. eingerichtet. Der Sequenzzähler SEQ_{C} dient dabei zur Berechnung der Sitzungsschlüssel SK_{ENC}, SK_{MAC} die zur sicheren Übertragung von Programmquelltexten Q vom Nutzercomputer 20 zum Compilerserver 30 genutzt werden, der Sequenzzähler SEQ_{H} dient zur Berechnung von Sitzungsschlüsseln SK_{ENC}, SK_{MAC}, die zur sicheren Übertragung von Programmcodes C vom Compilerserver 30 zum Nutzercomputer 20 genutzt werden.

Auf dem Compilerserver 30 werden für jede ausgegebene Chipkarte 10 zwei Sequenzzähler 338 mit Werten den SEQ_{C}, SEQ_{H} eingerichtet. Die Werte SEQ_{C}, SEQ_{H} stimmen, damit der Compilerserver 30 nach der gleichen Rechenvorschrift, wie sie die Chipkarte 10 einsetzt, die Sitzungsschlüssel SK_{ENC}, SK_{MAC} berechnen kann, stets mit den Werten der korrespondierenden Sequenzzähler 136 der zugeordneten Chipkarte 10 überein. Zur Erhöhung der Sicherheit werden bei jeder Übertragung von Programmquelltexten Q bzw. Programmcodes C andere Sitzungsschlüssel SK_{ENC,} SK_{MAC} verwendet. Zu diesem Zweck erhöhen Chipkarte 10 und Compilerserver 30 jeweils vor der Berechnung von Sitzungssschlüssel SK_{ENC}, SK_{MAC} die Werte SEQc bzw. SEQ_{H} der Sequenzzähler 136, 338.

Der Editor 22 erlaubt die Erstellung von Programmquelltext Q, z.B. in einer Programmierhochsprache. Vorzugsweise unterstützt er die Programmerstellung durch eine graphisch unterlegte, dialoggesteuerte Eingabeführung und bietet direkt nutzbare Entwicklungshilfsmittel wie eine Syntaxprüfung oder die Einbindung von Programmschnittstellen zur Codebibliothek.

Stehen Chipkarte 10 in vorkomplettierter Form und Nutzercomputer 20 bereit, erstellt der Nutzer unter Verwendung des Editors 22 den Programmquelltext Q eines zur Einbringung in eine Chipkarte 10 bestimmten Programmes, Schritt 504. Vorzugsweise erfolgt die Erstellung in einer Programmierhochsprache, generell ist aber auch jedes andere Format möglich. Ist ein Programmquelltext Q erstellt, beauftragt der Nutzer die Chipkarte 10 über den Editor 22 mittels eines entsprechenden Befehles, den Programmquelltext Q zu verschlüsseln und mit einem MAC gegen Veränderung zu sichern. Dazu erhöht die Chipkarte 10 zunächst den Sequenzzählerwert SEQ_{C} und generiert die Sitzungssschlüssel SK_{ENC} und SK_{MAC}, z.B. mit dem symmetrischen 3DES -Algorithmus, Schritt 506. Anschließend verschlüsselt sie den von dem Editor 22 über die Schnittstellen 24,14 erhaltenen Programmquelltext Q mit dem Sitzungsschlüssel SK_{ENC} zu einem Zwischencode Q' und berechnet mit dem Sitzungsschlüssel SK_{MAC} einen MAC über Q', Schritt 508. Zwischencode Q' und MAC übergibt die Chipkarte 10 sodann über die Schnittstellen 24,14 zurück an den Editor 22.

Dieser ermittelt desweiteren die im Speicherbereich 114 der Chipkarte 10 angelegte Kartenidentifikation ID, Schritt 509, und fügt sie mit dem Zwischencode Q' sowie dem MAC zu einem Transportcode T zusammen. Den derart gebildeten Transportcode T übermittelt der Nutzercomputer 20 über das Datennetz 28 an den Compilerserver 30, Schritt 510. Die Übertragung des Transportcodes T kann dabei in beliebiger Weise über ein ungesichertes Medium erfolgen. Beispielsweise kann der Transportcode T als E-mail übertragen oder auf Diskette per Post an den Herausgeber geschickt werden. Daneben kann der Transportcode T auch online über das Datennetz 28 an den Compilerserver 30 geschickt werden. Vertraulichkeit und Integrität des übermittelten Transportcodes T werden durch die Verschlüsselung und die MAC Berechnung durch die Chipkarte 10 gewährleistet.

Beim Compilerserver 30 eingegangen, prüft dieser zunächst, Schritt 512, ob die im Transportcode T enthaltene Identifikationsinformation ID auch in der im Compilerserver 30 geführten Identifikationsliste 340 enthalten ist, die vorzugsweise eine Kundenliste bildet. Trifft das zu, leitet er zunächst aus den in den Speicherbereichen 324, 326 befindlichen Masterschlüsseln MK_{ENC} und MK_{MAC} mit Hilfe der Identifikationsinformation ID die zugehörigen kartenindividuellen Schlüssel K_{ENC} und K_{MAC} ab, Schritt 514. Aus diesen Schlüsseln sowie dem inkrementierten Sequenzzähler SEQc berechnet der Compilerserver 30 sodann die Sitzungsschlüssel SK_{ENC} und SK_{MAC} nach derselben Rechenvorschrift, die zuvor die Chipkarte 10 verwendet hat. Mit dem Sitzungsschlüssel SK_{MAC} berechnet der Compilerserver 30 anschließend seinerseits einen MAC', Schritt 516, und vergleicht ihn mit dem in dem Transportcode T enthaltenen MAC. Stimmen beide überein, erkennt der Compilerserver 30 den Transportcode T als authentisch, d.h. von der Chipkarte 10 mit der Identifikationsinformation ID kommend, und integer, d.h. nicht bei der Übertragung verändert.

Hat der Compilerserver 30 einen Transportcode T als authentisch erkannt, entschlüsselt er den im Transportcode T enthaltenen Programmquelltext Q' mittels des Sitzungsschlüssels SK_{ENC}. Aufgrund der zuvor festgestellten Integrität des Transportcodes T stimmt das resultierende, entschlüsselte Format mit dem auf dem Nutzercomputer 20 ursprünglich erstellten Programmquelltext Q überein.

Den wiederhergestellten Programmquelltext Q überführt der Compilerserver 30 unter Verwendung des Kompilierungsprogrammes 310 in ein Zwischenformat, das er anschließend mittels des Linkprogrammes 312 unter Zugriff auf die Codebibliothek 318 mit bereits vorhandenem Programmcode verbindet, Schritt 518.

Kompilierungsprogramm 310 und Linkprogramm 312 sind in einer zweckmäßigen Gestaltung in Form eines Hardware-Sicherheitsmodules ausgeführt, welches die Compilier- und Linkfunktionalität, die Ent- und Verschlüsselung der bearbeiteten Programmdaten, die Prüfung und Erstellung von Signaturen sowie die Authentisierung beinhaltet. Alle bearbeiteten Programmdaten, insbesondere eingehende Programmquelltexte Q und erzeugte ausführbare Programmcodes C erscheinen dann außerhalb des Hardware-Sicherheitsmodules nur in verschlüsselter Form. Auf diese läßt sich sicherstellen, daß anwendungsspezifisches Know-How der Nutzer gegen Einsicht und Zugriffe über den Compilerserver 30 geschützt wird.

Zweckmäßig kann im Compilerserver 30 desweiteren eine Beschränkung des Zugriffes auf die Codebibliothek 318 eingerichtet sein, welche z.B. die Einbindung schon vorhandenen Programmcodes in einen neu erzeugten durch das Linkprogramm 312 beschränkt.

Der nach Compilierung und Linken resultierende Programmcode C wird mittels des Verifikationsprogrammes 321 formal verifiziert. Dabei wird der Programmcode C auf offensichtliche Fehler geprüft, etwa auf Einhaltung des Adreßraumes, auf Beachtung der vorgegebenen Speichergrößen, auf Typverletzungen oder auf Aggressivität, Schritt 520.

Ist der aus dem Programmquelltext Q erzeugte Programmcode C danach verwendungsfähig, d.h. durch die Chipkarte 10 ausführbar, wird er für die Rückübertragung in einen Transportcode U umgewandelt. Hierzu wird zunächst der Sequenzzählerwert SEQ_{H} erhöht. Mit dem erhöhten Sequenzzählerwert SEQ_{H} werden anschließend aus den Masterschlüsseln MK_{ENC} bzw. MK_{MAC} und der Identifikationsinformation ID die kartenindividuellen Schlüssel K_{ENC} und K_{MAC} abgeleitet und damit wiederum Sitzungsschlüssel SK_{ENC} und SK_{MAC} berechnet, Schritt 522. Die Berechnung der Sitzungsschlüssel SK_{ENC}, SK_{MAC} durch den Compilerserver 30 erfolgt auf dieselbe Weise wie sie zuvor, in Schritt 506, vom Nutzercomputer 20 vorgenommen wurde, wobei lediglich anstelle des Sequenzzählerwertes SEQ_{C} der Sequenzzählerwert SEQ_{H} verwendet wird.

Nachfolgend wird mit dem Sitzungsschlüssel SK_{ENC} der Programmcode C zu einem Zwischencode C' verschlüsselt und über den Zwischencode C' mittels des Sitzungsschlüssel SK_{MAC} weiterhin ein MAC" berechnet, Schritt 524. Zwischencode C' und MAC" werden sodann zu einem Transportcode U zusammengefügt, den der Compilerserver 30 an den Nutzercomputer 20 übersendet, Schritt 526. Für die Übersendung des Transportcodes U kann wie im Falle des Transportcodes T ein beliebiges, insbesondere auch ein an sich unsicheres Übertragungsmedium wie eine Diskette oder der Versand per E-mail gewählt werden. Selbstverständlich ist daneben auch die Nutzung einer Online-Verbindung über ein Datennetz 28 möglich. Wird eine Online-Verbindung genutzt, besteht die Möglichkeit, zu einem Auftrag, d.h. der Absendung eines in einem Transportcode enthaltenen Programmquelltextes Q an einen Compiler 30, in einer einzelnen Online-Sitzung auch das Ergebnis, d.h. einen Transportcode U mit dem Programmcode C zu erhalten.

Der Nutzercomputer 20 leitet den erhaltenen Transportcode U über die Schnittstellen 24, 14 weiter an die Chipkarte 10, Schritt 528. Jene erhöht den Wert SEQ_{H} des Sequenzzählers 136, erzeugt damit auf dieselbe Weise wie zuvor der Compilerserver 30 in Schritt 522 die Sitzungssschlüssel SK_{ENC} bzw. SK_{MAC} und prüft, ob der mit Transportcode U übermittelte MAC" identisch dem MAC ist, den die Chipkarte 10 selbst mittels des Schlüssels SK_{MAC} aus U berechnen kann, Schritt 530. Stimmen MAC" und MAC überein, ist der MAC" aus U erfolgreich verifiziert. Da außer der Chipkarte 10 selbst nur der Compilerserver 30 über die Möglichkeit verfügt, den Schlüssel SK MAC zu benutzen, ist der durch Entschlüsselung des in dem Transport-code U übermittelten Programmcodes C' gewonnenen Programmcode C authentisch, d.h. er wurde vom Compilerserver 30 aus einen von derselben Chipkarte 10 transportgesicherten Programmquelltext Q generiert. Der als authentisch erkannte Programmcode C wird von der Chipkarte 10 in den Kartenspeicher 113 geladen, Schritt 532.

Fig. 6 zeigt als Flußdiagramm eine Ausführungsform einer verteilten Programmerstellung, bei der die zwischen Nutzercomputer 20 und Compilerserver 30 über das Datennetz 28 erfolgende Datenübertragung mittels SSL gesichert ist, während der direkte Datentransport zwischen Chipkarte 10 und Compilerserver 30 mit Hilfe des Secure-Messaging-Mechanismus ausgeführt wird. Die Ausführungsform eignet sich wie die in Fig. 5 dargestellte Ausführungsform besonders für eine Online-Ausführung in Systemen, in denen die verwendeten Chipkarten 10 nur symmetrische Verschlüsselungstechniken erlauben.

Eine zur Durchführung der zweiten Ausführungsform vorkomplettierte Chipkarte 10 umfaßt neben der Grundausstattung 110 mit Betriebssystem 111, Basisprogrammcode 112 und Speicherraum 113 für Komplettierungsprogrammcode, eine Routine 120 zur Durchführung des Secure-Messagings, einen privaten Kartenschlüssel 130 sowie einen öffentlichen Serverschlüssel 128. Der Nutzercomputer 20 verfügt ferner über die Programmfunktionalität zur Ausführung des SSL-Protokolls ohne Authentisierung von Chipkarten.

Die Durchführung einer Programmerstellung in der zweiten Ausführungsform entspricht zunächst der ersten Ausführungsform gemäß Fig. 5 und umfaßt die Schritte 500 bis 504.

Liegt ein Programmquelltext Q vor, richtet der Nutzer über das Datennetz 28 eine Verbindung zwischen seinem Computer 20 und dem Compilerserver 30 des Herausgebers ein, Schritt 600.

Ist die physikalische Verbindung zum Compilerserver 30 hergestellt, wird zwischen Nutzercomputer 20 und Compilerserver 30 ein SSL-Protokoll gestartet. Nutzercomputer 20 und Compilerserver 30 bestimmen dabei jeweils einen Sitzungsschlüssel SK_{SSL}, Schritte 601, 602. Anschließend wird innerhalb des SSL-Protokolls ein sogenannter IP-Tunnel zwischen Compilerserver 30 und Chipkarte 10 zur Ausführung des Secure-Messagings eingerichtet, Schritt 604. Im Nutzercomputer 20 wird dabei das von der Chipkarte 10 durchgeführte Protokoll des Secure-Messagings in das, nur zwischen Nutzercomputer 20 und Compilerserver 30 eingesetzte SSL-Protokoll eingebettet. In dem IP-Tunnel werden nachfolgend chipkartenspezifische Datensätze, vorzugsweise in Gestalt von APDUs (Application Protocol Data Unit) direkt zwischen Chipkarte 10 und Compilerserver 30 transportiert. In Bezug auf das Secure-Messaging fungiert der Nutzercomputer 20 nur als reiner Mittler.

Gemäß dem Secure-Messaging führen Chipkarte 10 und Compilerserver 30 sodann eine wechselseitige Authentifizierung durch, wobei sich zunächst die Karte 10 gegenüber dem Compilerserver 30 authentisiert, Schritt 606, anschließend der Compilerserver 30 gegenüber der Karte 10, Schritt 608. Verläuft die wechselseitige Authentifizierung zwischen Chipkarte 10 und Compilerserver 30 erfolgreich, wird die Nutzung aller Funktionen des Compilerservers 30 mittels des Nutzercomputers 20 freigegeben, Schritt 610.

Liegt die Nutzungsfreigabe vor, verschlüsselt der Nutzercomputer 20 den erstellten Programmquelltext Q mit dem vorher bestimmten Sitzungsschlüssel SK_{SES} und übermittelt den daraus resultierenden Transportcode TQ an den Compilerserver 30, Schritt 612.

Im Compilerserver 30 eingegangen wird der Transportcode TQ mit Hilfe des zuvor im Compilerserver 30 generierten Sitzungsschlüssel SK_{SSL} wieder entschlüsselt, Schritt 614, und in den auf dem Nutzercomputer 20 erstellten Quelltext Q überführt. Zweckmäßig erfolgt die Ausführung der Schritte 610, 612, 614 in Form eines kontinuierlichen Datenaustausches zwischen Nutzercomputer 20 und Compilerserver 30, so daß die Wiederherstellung des Quelltextes Q im Compilerserver 30 unmittelbar nach Erhalt des letzten verschlüsselten Quelltextdatensatzes vom Nutzercomputer 20 abgeschlossen wird.

Aus dem Quelltext Q erzeugt der Compilerserver 30 sodann durch Ausführung der anhand der Fig. 5 beschriebenen Schritte 518 und 520 einen ausführbaren Programmcode C.

Den ausführbaren Programmcode C wandelt der Compilerserver 30 durch Anwendung der Secure-Messaging-Mechanismen in gesicherten Programmcode C_{SM}, Schritt 620. Den gesicherten Programmcode C_{SM} überführt er anschließend durch Verschlüsselung mit Hilfe des Sitzungsschlüssel SK_{SES} in einen in einem Übergangsformat vorliegenden Transportcode UC_{SM}, Schritt 622. Durch die Verschlüsselung mit dem Sitzungsschlüssel SK_{SES} wird der, typischerweise in Gestalt von APDUs vorliegende, gesicherte Programmcode C_{SM} in eine Sicherung der Datenübertragung über das Datennetz 28 zwischen Compilerserver 30 und Nutzercomputer 20 eingebettet.

Den im Übergangsformat vorliegenden Transportcode UC_{SM} übermittelt der Compilerserver 30 an den Nutzercomputer 20. Dieser entschlüsselt UC_{SM} mittels des Sitzungssschlüssels SK_{SES}, Schritt 626, wodurch die zum Schutz der Datenübertragung zwischen Compilerserver 30 und Nutzercomputer 20 angebrachte Sicherung wieder entfernt wird. Den danach vorliegenden entschlüsselten, gemäß dem Secure-Messaging gesicherten Programmcode C_{SM} übergibt der Nutzercomputer 20 an die Chipkarte 10, Schritt 624.

In der Chipkarte 10 wird der gesicherte Programmcode C_{SM} durch Anwendung der umkehrenden Secure-Messaging-Mechanismen wieder in ausführbaren Programmcode C zurückgeführt, Schritt 628, und schließlich in die Speicheranordnung 104 in den dort zur Aufnahme von Komplettierungsprogrammcode vorbereiteten Bereich 113 geladen, Schritt 630.

Aus Gründen der Klarheit wurde vorstehend der in Fig. 6 dargestellte Verfahrensablauf als sequentielle Folge von separaten Schritten beschrieben. In der Praxis beinhalten die zwischen Chipkarte 10, Nutzercomputer 20 und Compilerserver 30 erfolgenden Datenübertragungen in der Regel einen Datenaustausch in jeweils beiden Richtungen. Sinnvoll ist es zudem, Verfahrensschritte, für die das möglich ist, in Form eines kontinuierlichen, quasiparallelen Datenaustausch- und Verarbeitungsprozesses auszuführen, in dem Compilerserver 30 und Nutzercomputer 20 bzw. Chipkarte 10 Verfahrensschritte.zeitlich überlagernd ausführen. Zweckmäßig ist dies z.B. für die Schritte 620 bis 630: sie werden vorzugsweise in Gestalt eines kontinuierlichen Datenaustausches zwischen Compilerserver 30 und Nutzercomputer 20 ausgeführt, in dem eine Übertragung von Datensätzen des Transportcodes UC_{SM} zum Nutzercomputer 20 bereits stattfindet, während auf dem Compilerserver 30 noch die Umsetzung des Programmcodes C gemäß dem Secure-Messaging erfolgt, und in dem die vom Compilerserver 30 über den Nutzercomputer 20 an die Chipkarte 10 übertragenen Datensätze durch diese unmittelbar vor dem Laden in den Speicherraum 113, d.h. ohne Zwischenspeicherung bis zum vollständigen Eingang, entschlüsselt werden.

Fig. 7 veranschaulicht eine weitere Ausführungsform der anhand der Fig. 4 beschriebenen Programmerstellung, bei der der Nutzercomputer 20 im wesentlichen nur als Mittler zwischen Chipkarte 10 und Compilerserver 30 wirkt. Die Sicherung der zwischen Chipkarte 10 und Compilerserver 30 transportierten Daten erfolgt, indem zwischen Compilerserver 30 und Chipkarte 10 unter Verwendung des SSL-Protokolls eine gesicherte, direkte "Ende-zu-Ende"-Verbindung eingerichtet wird.

Die Vorkomplettierung einer zur Durchführung dieser Ausführungsvariante geeigneten Chipkarte 10 beinhaltet neben der Einrichtung der Grundausstattung 110 mit Betriebssystem 111, Basisprogrammcode 112 und Speicherbereich für Komplettierungsprogrammcode 113 das Anlegen eines Programmes 122 zur Ausführung des SSL-Protokolls, die Hinterlegung eines Zertifikates 132, die Hinterlegung des privaten Kartenschlüssels 130 sowie die Hinterlegung des öffentlichen Serverschlüssels 128.

Die Durchführung des Verfahrens gemäß Fig. 7 entspricht zunächst der anhand der Fig. 5 beschriebenen Ausführungsform und umfaßt die Schritte 500 bis 504. Sie werden gefolgt von der Einrichtung einer Verbindung zwischen der Chipkarte 10 und einem Compilerserver 30 über den Nutzercomputer 20, Schritt 700.

Chipkarte 10 und Compilerserver 30 führen nun ein vollständiges SSL-Protokoll aus. Innerhalb der Handshake-Prozedur erfolgt hierbei eine wechselseitige Authentifizierung, indem zum einen das Compilerserverzertifikat 332 durch die Chipkarte 10 geprüft wird, Schritt 701, zum anderen das in der Chipkarte 10 angelegte Zertifikat 132 durch den Compilerserver 30, Schritt 702. Ist nach der wechselseitigen Zertifikatsprüfung eine Weiterführung des Datenaustausches möglich, generieren Chipkarte 10 und Compilerserver 30 jeweils einen Sitzungsschlüssel, Schritt 704 bzw. 706.

Die in Fig. 7 veranschaulichte Ausführungsform eignet sich besonders zur Online-Durchführung. Nach Herstellung einer sicheren Datenverbindung zwischen Chipkarte 10 und Compilerserver 30 kann deshalb vorgesehen sein, daß der Nutzer unter einer Auswahl mehrerer möglicher Betriebsoptionen zur Weiterbearbeitung eine Auswahl treffen muß. In diesem Fall sendet der Compilerserver 30 nach Herstellung der sicheren Datenverbindung eine Anbietungsmitteilung über die möglichen Betriebsoptionen an den Nutzercomputer 20, Schritt 708. Aus den mitgeteilten Optionen wählt der Nutzer über den Nutzercomputer 20 die gewünschte aus, etwa eine Programmerstellung mit Online-Übersetzung, Schritt 710, oder einen Debug-Modus, in dem die Ausführbarkeit eines neu erzeugten Programmcodes online festgestellt wird.

Zur Erhöhung der Sicherheit der Datenübertragung zum Compilerserver 30 kann nachfolgend optional eine Signatur des Programmquelltextes Q durch die Chipkarte 10 vorgesehen sein, Schritt 711. Die Signatur erfolgt in an sich bekannter Weise, indem die Chipkarte 10 über den Quelltext Q einen Hashwert bildet und diesen mit dem privaten Schlüssel 130 der Chipkarte verschlüsselt. Die Hashwertbildung kann dabei, insbesondere bei nicht ausreichenden Hardwareresourcen auf einer Chipkarte 10, durch den Nutzercomputer 20 erfolgen.

Den, gegebenenfalls signierten Programmquelltextcode verschlüsselt die Chipkarte 10 mit dem zuvor bestimmten Sitzungsschlüssel SK_{SSL} zu einem Transportcode TQ_{SSL}, Schritt 712, den sie anschließend über den Nutzercomputer 20 an den Compilerserver 30 sendet, Schritt 714.

Jener entschlüsselt den eingegangenen Transportcode TQ_{SSL} wieder mit dem Sitzungsschlüssel SK_{SES}, Schritt 716, um den Programmquelltext Q wiederherzustellen. Falls eine Signatur vorhanden ist, prüft er durch erneute Bildung des Hashwertes unter Verwendung des öffentlichen Kartenschlüssels 332 deren Richtigkeit.

Aus dem wiederhergestellten Programmquelltext Q erzeugt der Compilerserver 30 anschließend durch Ausführung der Schritte 518, 520 einen ausführbaren Programmcode C.

Den erzeugten Programmcode C versieht der Compilerserver 30 mit einer Signatur, die er durch Bildung eines Hashwertes und Verschlüsseln des Hashwertes mit dem privaten Schlüssel 330 des Compilerservers 30 erzeugt. Den entstandenen, signierten Code verschlüsselt er sodann mit dem öffentlichen Schlüssel 332 der Chipkarte 10, Schritt 718. Das danach vorliegende Chiffrat überführt der Compilerserver 30 nachfolgend durch Verschlüsseln mit dem Sitzungsschlüssel SK_{SES} in ein Übergangsformat C_{SSL}, Schritt 720, das er als Transportcode schließlich an den Nutzercomputer 20 übermittelt, Schritt 722.

Dieser leitet den eingegangenen Transportcode C_{SSL} an die Chipkarte 10 weiter, Schritt 724 welche daraus durch Entschlüsselung mit dem Sitzungsschlüssel SK_{SES} wieder das Chiffrat des ausführbaren Programmcodes generiert, Schritt 725. Falls der Programmcode C im Compilerserver 30 signiert wurde, entschlüsselt die Chipkarte 10 das Chiffrat weiter mit dem privaten Schlüssel 130 der Chipkarte 10 und prüft die danach vorliegende Signatur mit dem öffentlichen Schlüssel 128 des Compilerservers 30, Schritt 726. Ist das Ergebnis der Signaturprüfung positiv, lädt die Chipkarte 10 den somit vorliegenden ausführbaren Programmcode C in die Speicheranordung 104 in den zur Aufnahme von Komplettierungsprogrammcode vorgesehenen Speicherraum 113, Schritt 728.

Wie bei der Ausführungsform nach Fig.5 wurde der in Fig. 7 dargestellte Verfahrensablauf der Klarheit wegen sequentiell beschrieben. Praktisch ist es jedoch sinnvoll, Verfahrensschritte, für die das möglich ist, quasiparallel auszuführen, indem Compilerserver 30 und Chipkarte 10 sie zeitlich überlagernd ausführen. Das gilt z.B. für die Schritte 712 bis 716, d.h. die chipkartenseitige Verschlüsselung und die compilerserverseitige Wiederherstellung des Programmquelltextes Q. Sie erfolgen zweckmäßig in Form eines kontinuierlichen, quasiparallelen Datenaustausch- und verarbeitungsprozesses, so daß der Programmquelltext Q nahezu unmittelbar nach Absendung des letzten Datensatzes durch die Chipkarte 10 im Compilerserver 30 vorliegt. Eine Zwischenspeicherung bis zum vollständigen Eingang des Programmquelltext Q erfolgt nicht. Weiter bietet sich eine Realisierung in Gestalt eines kontinuierlichen, quasiparallelen Datenaustausch- und verarbeitungsprozesses auch für die Schritte 718 bis 728 an, d.h. für die compilerserverseitige Verschlüsselung des ausführbaren Programmcodes C und seine chipkartenseitige Wiederherstellung sowie das Laden in den Speicherraum 113 auf der Chipkarte 10. Die Ausführung dieser Schritte durch Compilerserver 30 und Chipkarte 10 erfolgt zweckmäßig ohne Zwischenspeicherung unmittelbar datensatzweise, so daß der ausführbare Programmcode C im wesentlichen unmittelbar nach Absendung des letzten Transportcodedatensatzes durch den Compilerserver 30 im Speicher der Chipkarte 10 vorliegt.

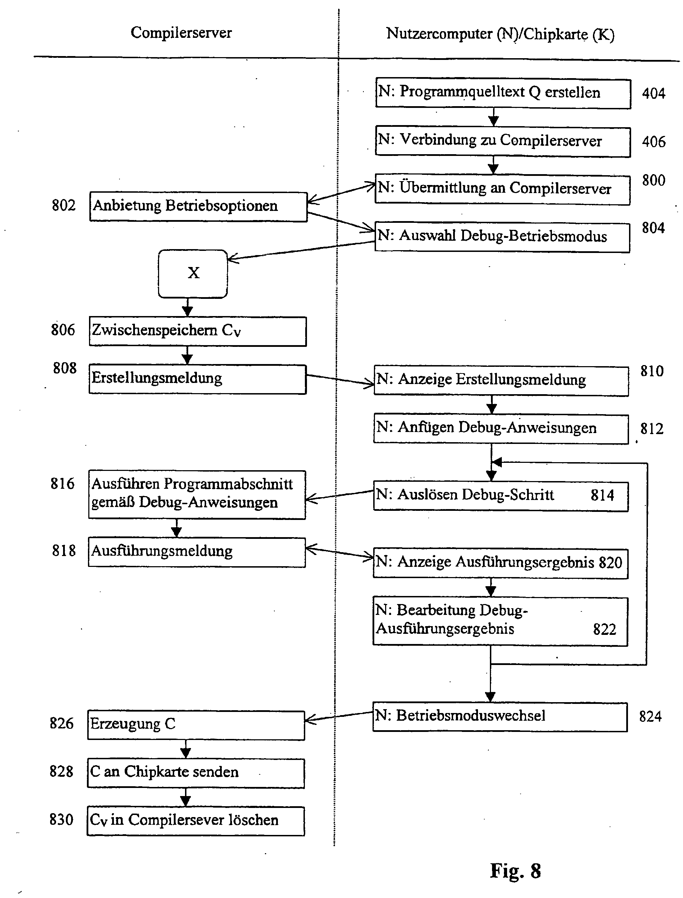

Im Rahmen einer Programmerstellung gemäß einer der vorstehend beschriebenen Ausführungsformen kann die Durchführung einer Debug-Routine vorgesehen sein. Damit wird ein durch den Compilerserver 30 erstellter Programmcode C vor dem Laden auf eine Chipkarte 10 auf Lauffähigkeit geprüft. Das Prinzip einer solchen Debug-Routine ist in Fig. 8 veranschaulicht, wobei zur Vereinfachung der Beschreibung die zur Sicherung der Datenübertragung gerichteten Maßnahmen, d.h. vor allem die verschiedenen Verschlüsselungen, nicht gezeigt sind.

Die Debug-Routine ist als Programm 316 im Compilerserver 30 angelegt und wird auch dort ausgeführt. Zusätzlich oder als Bestandteil des Programmes 316 beinhaltet sie eine einen Datenträger nachbildende Hardware zur Simulation und/oder eine softwaremäßige Nachbildung eines Datenträgers zur Emulation eines erzeugten Programmes auf dem Compilerserver 30 unter den auf dem Datenträger vorhandenen technischen Randbedingungen. Gesteuert wird sie, nach Einstellung eines entsprechenden Betriebsmodus im Compilerserver 30, über den Editor 22 im Nutzercomputer 20. Die Betriebsmoduseinstellung kann z.B. im Rahmen der Auswahl einer Betriebsoption in den Schritten 708 und 710 erfolgen, wenn die Programmerstellung gemäß der in Fig. 6 dargestellten Ausführungsform vorgenommen wird. Der Debug-Betriebsmodus gestattet es u.a., vom Nutzercomputer 20 aus ein im Compilerserver 30 erzeugtes Programm zu starten, Stopmarken zu setzen, Speicherbereiche anzuzeigen sowie Variablen auszulesen und zu setzen.

Für die Ausführung der Debug-Routine wird zunächst in üblicher Weise ein Programmquelltext Q erstellt, Schritt 504, und eine Verbindung zum Compilerserver 30 aufgebaut, Schritt 700. Anschließend wird der Quelltext Q gemäß einer der zuvor beschriebenen Ausführungsformen an den Compilerserver 30 übermittelt, Schritt 800.

ist der Quelltext Q eingegangen, bietet der Compilerserver 30 dem Nutzer die Erzeugung eines Programmcodes C im Debug-Betriebsmodus an, Schritt 802. Ein Nutzer kann den Modus darauf über den Nutzercomputer 20 auswählen, Schritt 804. Wurde der Debug-Betriebsmodus gewählt, erstellt der Compilerserver 30 aus dem eingegangenen Programmquelltext Q durch Ausführung der Schritte 526, 528 einen vorläufigen Programmcode Cv, der auf der im Compilerserver 30 vorhandenen Simulations- und/oder Emulationsumgebung lauffähig ist. Den vorläufigen Programmcode Cv speichert der Compilerserver 30 in einen Zwischenspeicher, Schritt 806. Anschließend übermittelt er dem Nutzercomputer 20 eine Erstellungsmeldung, Schritt 808, die dieser zur Anzeige bringt, Schritt 810.

Der Nutzer kann das Quelltextprogramm Q nun mittels des Nutzercomputers 20 mit Debug-Anweisungen versehen, d.h. Stopmarken setzen, die Ausführung eines Programmes in Einzelschritten oder das Anzeigen von Variablen veranlassen, Schritt 812. Die Debug-Anweisungen werden dem Compilerserver 30 mitgeteilt.

Nachfolgend kann über den Nutzercomputer 20 die Ausführung des durch den vorläufigen Programmcode Cv realisierten Programmes auf dem Compilerserver 30 ausgelöst werden, Schritt 814. Der Compilerserver 30 führt darauf das Programm unter Berücksichtigung der zuvor mitgeteilten Debug-Anweisungen aus, Schritt 816. Jeweils nach Ausführung eines durch die Debug-Anweisungen festgelegten Programmabschnittes übermittelt er eine Ergebnismeldung an den Nutzercomputer 20, Schritt 818, die dieser zur Anzeige bringt, Schritt 820. Abhängig von den übergebenen Debug-Anweisungen kann darauf ein Eingriff eines Nutzers in die Programmausführung vorgesehen sein, etwa durch Eingabe von Variablen oder durch Setzen neuer Debug-Anweisungen, Schritt 822. Gegebenenfalls vorgenommene Eingriffe in den Programmquelltext Q oder neue Debug-Anweisungen, übermittelt der Nutzercomputer 20 dem Compilerserver 30. Ist eine Debug-Anweisung schließlich abgearbeitet, übermittelt der Nutzercomputer 20 dem Compilerserver 30 ein Fortsetzungssignal, Schritt 824, auf das hin jener durch Wiederholung des Schrittes 814 die Ausführung des nächsten Programmabschnittes veranlaßt. Dabei berücksichtigt er eventuell vorgenommene Eingriffe in den Programmquelltext Q oder neue Debug-Anweisungen. Die Schritte 814 bis 824 werden wiederholt, bis der Compilerserver 30 ein durch einen vorläufigen Programmcode Cv realisiertes Programm vollständig ausgeführt hat.

Erweist sich das Programm schließlich als fehlerfrei lauffähig, veranlaßt der Nutzer über den Nutzercomputer 20 einen Wechsel des Betriebsmodus in den Standard-Modus, Schritt 826. Der Compilerserver 30 erzeugt daraufhin aus dem zu diesem Zeitpunkt vorliegenden Programmquelltext Q einen lauffähigen Programmcode C und überträgt diesen wie anhand der Fig. 4 bis 6 beschrieben über den Nutzercomputer 20 an die Chipkarte 10, Schritt 828. Desweiteren löscht er den zwischengespeicherten, vorläufigen Programmcode Cv, Schritt 830

Die vorstehend beschriebene Folge von Ausführungsbeispielen ist jeweils als Basis für eine konkrete Verfahrensrealisierung zu verstehen. Unter Beibehaltung des grundlegenden Ansatzes, zur Erzielung einer sicheren Programmerstellung vorkomplettierte Datenträger zu verwenden, sind die Ausführungsbeispiele jeweils in einem weiten Rahmen ausgestaltbar. Dies gilt insbesondere für die Ausführung der Strukturelemente, d.h. der Chipkarte , des Nutzercomputers, des Datennetzes und des Compilerservers. Weiter können die genannten Verschlüsselungs- und Authentifizierungsverfahren selbstverständlich durch andere mit gleicher Sicherheitswirkung ersetzt werden. Alle beschriebenen Ausführungsformen lassen sich insbesondere durch die Verwendung weiterer Schlüssel, Sequenzzähler oder anderer kryptografischer Algorithmen auf eine nochmals erhöhte Sicherheitsstufe bringen. Aus technischen oder aus Sicherheitsgründen können auch weitere Umformatierungen vorgesehen sein. So ist es insbesondere bei programmierbaren Chipkarten mit Blick auf deren begrenzten Speicherplatz üblich, einen auf einem Compilerserver 30 erzeugten lauffähigen Programmcode vor oder beim Laden in die Chipkarte nochmals speicheroptimierend umzuformatieren, indem beispielsweise symbolische Referenzierungen durch absolute Adressen ersetzt werden. Aus Gründen der Übersichtlichkeit wurden ferner jeweils nur Gutfälle beschrieben. Die Behandlung von Fehlerfällen läßt sich daraus jedoch unter Verwendung bekannter Standardlösungen ableiten.

## Patentansprüche

1. Verfahren zur verteilten Erstellung eines ausführbaren Programmes für einen programmierbaren, tragbaren Datenträger, wobei die Erstellung eines Programmquelltextes auf einem ersten, bei einem Nutzer befindlichen Computer, Compilieren und Linken des Programmquelltextes zu einem ausführbaren Programmcode nach Übertragung auf einem zweiten, beim Herausgeber des Datenträgers befindlichen Computer, und das Laden des ausführbaren Programmcodes in den Datenträger nach Rückübertragung wieder über den ersten Computer erfolgt, **dadurch gekennzeichnet, daß**
in einem Vorbereitungsschritt dem Nutzer ein Editierungsprogramm (22) zur Erstellung eines Quelltextes (Q) eines Programmes für einen tragbaren Datenträger (10) bereitgestellt wird,
in einem Vorkomplettierungsschritt auf dem Datenträger (10) Softwarewerkzeuge zur Endbearbeitung angelegt werden, die es erlauben, aus einem Transportcode (U, UC_{SM}, C_{SSL}), der durch Anwendung eines Verschlüsselungsmechanismus auf einen ausführbaren Programmcode (C) gebildet wurde, wieder einen ausführbaren Programmcode (C) zu gewinnen,
im zweiten Computer (30) erzeugter, ausführbarer Programmcode (C) für die Rückübertragung durch Anwendung eines Verschlüsselungsmechanismus, in dem der Programmcode (C) mit einer Verschlüsselung versehen wird, die nur mittels der auf dem Datenträger (10) angelegten Softwarewerkzeuge wieder aufhebbar ist, in einen Transportcode (U, UC_{SM}, C_{SSL}) umgewandelt wird, und
an den ersten Computer (20) rückübertragener Transportcode (U, UC_{SM}, C_{SSL}) an den Datenträger (10) weitergeleitet wird, auf dem er mittels der Softwarewerkzeuge in ausführbaren Programmcode (C) rückgewandelt wird.

2. Verfahren nach Anspruch 1, **dadurch gekennzeichnet, daß** der auf dem ersten Computer (20) erstellte Programmquelltext (Q) für die Übertragung zum zweiten Computer (30) eine Transportsicherung erhält, indem er verschlüsselt wird.

3. Verfahren nach Anspruch 1, **dadurch gekennzeichnet, daß** die Softwarewerkzeuge eine einen Datenträger (10) bezeichnende Identifikationinformation (114) sowie einen Signaturschlüssel (124) beinhalten.

4. Verfahren nach Anspruch 1, **dadurch gekennzeichnet, daß** die Softwarewerkzeuge ein Programm zur Durchführung eines SSL-Handshake-Protokolls (122) und / oder ein Programm zur Durchführung von Secure-Messaging (120) beinhalten.

5. Verfahren nach Anspruch 1, **dadurch gekennzeichnet, daß** die Softwarewerkzeuge einen privaten Datenträgerschlüssel (130) sowie ein Programm zur Prüfung einer Signatur mit dem öffentlichen Schlüssel (128) eines zweiten Computers (30) beinhalten.

6. Verfahren nach Anspruch 1, **dadurch gekennzeichnet, daß** in den tragbaren Datenträger (10) zu ladender, ausführbarer Programmcode (C) unter Einbeziehung des zweiten Computers (30) ausgeführt wird, um mögliche Fehler zu ermitteln.

7. Verfahren nach Anspruch 6, **dadurch gekennzeichnet, daß** in den tragbaren Datenträger (10) zu ladender, ausführbarer Programmcode (C) auf dem zweiten Computer (30) unter Einbeziehung des ersten Computers (20) ausgeführt wird.

8. Verfahren nach Anspruch 1, **dadurch gekennzeichnet, daß** der ausführbare Programmcode (C) im Speicher (113) des Datenträgers (10) abgelegt wird.

9. Programmierbarer tragbarer Datenträger mit einem integrierten Schaltkreis zur Ausführung des Verfahrens nach Anspruch 1, wobei der integrierte Schaltkreis einen Prozessor sowie einen Speicher zur Aufnahme von durch den Prozessor ausführbarem Programmcode aufweist, **dadurch gekennzeichnet, daß** in dem integrierten Schaltkreis (12) Softwarewerkzeuge angelegt sind, um einen auf einem ersten Computer (20) erzeugten Programmquelltext (Q) für die Übertragung an einen zweiten Computer (30) mit einer Transportsicherung zu versehen, indem wenigstens ein Verschlüsselungsmechanismus (506, 601, 704) bereitgestellt und auf den zu übertragenen Programmquelltext (Q) angewandt wird, und weiterhin Softwarewerkzeuge zur Endbearbeitung angelegt sind, die es ermöglichen, einen Transportcode (U, UC_{SM}, C_{SSL}) in ausführbaren Programmcode (C) zu überführen.

10. Datenträger nach Anspruch 9, **dadurch gekennzeichnet, daß** er wenigstens einen Sequenzzähler (136) aufweist.

11. Datenträger nach Anspruch 9, **dadurch gekennzeichnet, daß** er eine den Datenträger (10) bezeichnende Identifikationsinformation (114) sowie einen Schlüssel (124) zur Bildung eines Datensicherungscodes enthält, welche ihn einem definierten zweiten Computer (30) zuordnen.

12. Computer zur Durchführung einer verteilten Erstellung eines ausführbaren Programmes für einen programmierbaren, tragbaren Datenträger gemäß Anspruch 1, enthaltend zumindest ein Compilierungsprogramm sowie ein Linkprogramm (312), **dadurch gekennzeichnet, daß** er über Mittel verfügt, um aus einen zugegangenen, in einem Übergangsformat vorliegenden Transportcode (T, TQ, TQ_{SSL}) einen Programmquelltext (Q) rückzugewinnen.

13. Computer nach Anspruch 12, **dadurch gekennzeichnet, daß** er Mittel aufweist, um die Identität eines zu programmierenden Datenträgers (10) festzustellen und zu überprüfen.

14. Computer nach Anspruch 12, **dadurch gekennzeichnet, daß** er eine Tabelle (340) führt, in der für jeden tragbaren Datenträger (10), der mittels des Computers (30) programmierbar ist, eine den Datenträger bezeichnende Identifikationsinformation (114) abgelegt ist.

15. Computer nach Anspruch 12, **dadurch gekennzeichnet, daß** er über Mittel (321) zur formalen Verifikation eines durch Compilierung erzeugten Programmcodes (C) aufweist.

16. Computer nach Anspruch 12, **dadurch gekennzeichnet, daß** er über Mittel (316) verfügt, um einen erzeugten Programmcode (C) durch unmittelbare Ausführung darauf zu prüfen, ob er Fehler enthält.

17. Computer zur Durchführung einer verteilten Erstellung eines ausführbaren Programmes für einen programmierbaren, tragbaren Datenträger gemäß Anspruch 1, enthaltend zumindest eine erste Schnittstelle für einen Datenaustausch mit einem Datenträger sowie eine zweite Schnittstelle zu einer Datenverbindung,
**dadurch gekennzeichnet, daß**
er Mittel aufweist, um ein Editierungsprogramm (22) zur Erstellung eines durch den Computer (20) selbst nicht ausführbaren Programmquelltextes (Q) auszuführen,
und daß er Mittel aufweist, um über die erste und die zweite Schnittstelle (24, 26) eine direkte Datenübertragung zwischen einem tragbaren Datenträger (10) und einem über die Datenverbindung (28) angeschlossenen, zweiten Computer (39) zu ermöglichen.

18. Computer nach Anspruch 17, **dadurch gekennzeichnet, daß** er Mittel aufweist, um ein SSL-Protokoll auszuführen.

19. System zur verteilten Erstellung eines ausführbaren Programmes für einen programmierbaren, tragbaren Datenträger, beinhaltend einen tragbaren Datenträger gemäß Anspruch 9 sowie einem Computer gemäß Anspruch 12.

20. System nach Anspruch 19 **dadurch gekennzeichnet, daß** es weiterhin einen Computer gemäß Anspruch 17 umfaßt.

## Claims

1. A method for distributed creation of an executable program for a programmable portable data carrier, a program source text being created on a first computer located with a user, the program source text being compiled and linked into an executable program code, after transfer, on a second computer located with the issuer of the data carrier, and the executable program code being loaded into the data carrier after reverse transfer via the first computer, **characterized in that**
in a preparation step, the user is provided with an editing program (22) for creating a source text (Q) of a program for a portable data carrier (10),
in a precompletion step, software tools for final processing are created on the data carrier (10) that allow an executable program code (C) to be obtained again from a transport code (U, UC_{SM}, C_{SSL}) which was formed by application of an encryption mechanism to an executable program code (C),
executable program code (C) generated in the second computer (30) is converted into a transport code (U, UC_{SM}, C_{SSL}) for reverse transfer by application of an encryption mechanism in which the program code (C) is provided with an encryption which can only be removed again by means of the software tools created on the data carrier (10), and
transport code (U, UC_{SM}, C_{SSL}) retransferred to the first computer (20) is passed on to the data carrier (10) on which it is reconverted into executable program code (C) by means of the software tools.

2. A method according to claim 1, **characterized in that** the program source text (Q) created on the first computer (20) is given a transport security mechanism for transfer to the second computer (30) by being encrypted.

3. A method according to claim 1, **characterized in that** the software tools comprise identification information (114) designating a data carrier (10), and a signature key (124).

4. A method according to claim 1, **characterized in that** the software tools comprise a program for carrying out an SSL handshake protocol (122) and/or a program for carrying out Secure Messaging (120).

5. A method according to claim 1, **characterized in that** the software tools comprise a private data carrier key (130) and a program for testing a signature with the public key (128) of a second computer (30).

6. A method according to claim 1, **characterized in that** executable program code (C) to be loaded into the portable data carrier (10) is executed with the involvement of the second computer (30) to determine possible errors.

7. A method according to claim 6, **characterized in that** executable program code (C) to be loaded into the portable data carrier (10) is executed on the second computer (30) with the involvement of the first computer (20).

8. A method according to claim 1, **characterized in that** the executable program code (C) is stored in the memory (113) of the data carrier (10).

9. A programmable portable data carrier with an integrated circuit for performing the method according to claim 1, the integrated circuit having a processor and a memory for receiving program code executable by the processor, **characterized in that** software tools are created in the integrated circuit (12) for providing a program source text (Q) generated on a first computer (20) with a transport security mechanism for transfer to a second computer (30) by supplying at least one encryption mechanism (506, 601, 704) and applying it to the program source text (Q) to be transferred, and software tools for final processing are further created that permit a transport code (U, UC_{SM}, C_{SSL}) to be converted into executable program code (C).

10. A data carrier according to claim 9, **characterized in that** it has at least one sequence counter (136).

11. A data carrier according to claim 9, **characterized in that** it contains identification information (114) designating the data carrier (10), and a key (124) for forming a data protection code, which associate it with a defined second computer (30).

12. A computer for carrying out a distributed creation of an executable program for a programmable portable data carrier according to claim 1, containing at least a compilation program and a linking program (312), **characterized in that** it has means for recovering a program source text (Q) from a received transport code (T, TQ, TQ_{SSL}) present in a transient format.

13. A computer according to claim 12, **characterized in that** it has means for detecting and checking the identity of a data carrier (10) to be programmed.

14. A computer according to claim 12, **characterized in that** it maintains a table (340) storing identification information (114) designating the data carrier for each portable data carrier (10) that is programmable by means of the computer (30).

15. A computer according to claim 12, **characterized in that** it has means (321) for formal verification of a program code (C) generated by compilation.

16. A computer according to claim 12, **characterized in that** it has means (316) for checking a generated program code (C) by direct execution as to whether it contains errors.

17. A computer for carrying out a distributed creation of an executable program for a programmable portable data carrier according to claim 1, containing at least a first interface for data exchange with a data carrier and a second interface to a data link, **characterized in that**
it has means for executing an editing program (22) for creating a program source text (Q) not executable by the computer (20) itself,
and it has means permitting, via the first and second interfaces (24, 26), direct data transfer between a portable data carrier (10) and a second computer (39) connected via the data link (28).

18. A computer according to claim 17, **characterized in that** it has means for executing an SSL protocol.

19. A system for distributed creation of an executable program for a programmable portable data carrier, comprising a portable data carrier according to claim 9 and a computer according to claim 12.

20. A system according to claim 19, **characterized in that** it further comprises a computer according to claim 17.

## Revendications

1. Procédé de réalisation répartie d'un programme exécutable pour un support de données portatif programmable, dans laquelle la réalisation des lignes source de programme est effectuée sur un premier ordinateur se trouvant chez un utilisateur, la compilation et la liaison des lignes source de programme pour obtenir du code de programme exécutable sont réalisées après transmission à un deuxième ordinateur se trouvant chez l'éditeur du support de données, et le chargement du code de programme exécutable dans le support de données s'effectue après retransmission de nouveau sur le premier ordinateur, **caractérisé en ce que**,
en une étape de préparation, on fournit à l'utilisateur un programme d'édition (22), pour établir des lignes de code source Q d'un programme pour un support de données (10) portatif,
en une étape de précomplément sur le support de données (10), des outils logiciels pour le traitement final sont appliqués, permettant, depuis un code de transport
(U, UC_{SM} C_{SSL}), ayant été formé par application d'un mécanisme de chiffrement à un code programme (C) exécutable, d'obtenir de nouveau un programme (C) exécutable,
du code de programme (C) exécutable, produit dans le deuxième ordinateur (30), pour la retransmission par application d'un mécanisme de chiffrement, dans lequel le code de programme (C) est muni d'un chiffrement ne pouvant être supprimé qu'au moyen des outils logiciels appliqués au support de données (10), converti en un code de transport (U, UC_{SM}, C_{SSL}), et
le code (U, UC_{SM}, C_{SSL}) retransmis au premier ordinateur (20) est transmis au premier support de données (10), sur lequel il est reconverti en code de programme (C) exécutable au moyen d'outils logiciels.

2. Procédé selon la revendication 1, **caractérisé en ce que** les lignes de code source de programme (Q), établies sur le premier ordinateur (20, reçoivent pour la transmission au deuxième ordinateur (30) une sécurité de transport par le fait d'être chiffré.

3. Procédé selon la revendication 1, **caractérisé en ce que** les outils logiciels contiennent une information d'indentification (114) désignant un support de données (10), ainsi qu'une clé de signature (124).

4. Procédé selon la revendication 1, **caractérisé en ce que** les outils logiciels contiennent un programme pour exécution d'un protocole d'échange protocolaire SSL (122) et/ou un programme d'exécution de messagerie sécurisée (120).

5. Procédé selon la revendication 1, **caractérisé en ce que** les outils logiciels contiennent une clé de support de données (130) privée, ainsi qu'un programme de vérification de signature, avec la clé publique (128) d'un deuxième ordinateur (30).

6. Procédé selon la revendication 1, **caractérisé en ce que** du code du programme (C) exécutable, à charger dans le support de données (10) portatif, est exécuté en impliquant le deuxième ordinateur (30) pour déterminer des erreurs possibles.

7. Procédé selon la revendication 6, **caractérisé en ce que** du code du programme (C) exécutable, à charger dans le support de données (10) portatif, est exécuté sur le deuxième ordinateur (30), en impliquant le premier ordinateur (20).

8. Procédé selon la revendication 1, **caractérisé en ce que** du code du programme (C) exécutable est enregistré dans la mémoire (113) du support de données (10).

9. Support de données portatif programmable, avec un circuit intégré pour mise en oeuvre du procédé selon la revendication 1, où le circuit intégré présente un processeur ainsi qu'une mémoire pour enregistrement de code de programme exécutable par le processeur, **caractérisé en ce que** dans le circuit intégré (12) sont placés des outils logiciels, pour munir des lignes de code source de programme (Q), généré sur le premier ordinateur (20), pour la transmission à un deuxième ordinateur (30), d'une sécurité de transport, par le fait qu'au moins un mécanisme de chiffrement (506, 601, 704) est fourni et appliqué aux lignes de code source de programme (Q) à transmettre et, en plus, des outils logiciels sont appliqués pour traitement final, outils permettant de transformer un code de transport (U, UC_{SM} C_{SSL}) en du code de programme (C) exécutable.

10. Support de données selon la revendication 9, **caractérisé en ce qu'**il présente au moins un compteur de séquence (136).

11. Support de données selon la revendication 9, **caractérisé en ce qu'**il contient une information d'identification (114) désignant le support de données (10), ainsi qu'une clé (124) pour former un code de sécurité de données, qui l'associe à un deuxième ordinateur (30) défini.

12. Ordinateur pour mise en oeuvre d'une réalisation répartie d'un programme exécutable pour un support de données portatif programmable, selon la revendication 1, contenant au moins un programme de compilation, ainsi qu'un programme de liaison (312), **caractérisé en ce qu'**il dispose de moyens pour récupérer des lignes de code source de programme (Q), à partir d'un code de transport (T, TQ, TQ_{SSL}) parvenu, se présentant en un format transitoire.

13. Ordinateur selon la revendication 12, **caractérisé en ce qu'**il présente des moyens pour déterminer et vérifier l'identité d'un support de données à programmer.

14. Ordinateur selon la revendication 12, **caractérisé en ce qu'**il entretient un tableau (340), dans lequel, pour chaque support de données (10) portatif, programmable au moyen de l'ordinateur (30), est déposée une information d'identification (114) désignant le support de données.

15. Ordinateur selon la revendication 12, **caractérisé en ce qu'**il présente des moyens (321) pour effectuer une vérification formelle du code de programme (C) produit par compilation.

16. Ordinateur selon la revendication 12, **caractérisé en ce qu'**il dispositif de moyens (316) pour vérifier par une exécution directe le code de programme (C) généré, afin de savoir s'il contient des erreurs.

17. Ordinateur pour la mise en oeuvre d'une réalisation répartie d'un programme exécutable pour un support de données portatif programmable, selon la revendication 1, contenant au moins une première interface pour un échange de données avec un support de données, ainsi qu'une deuxième interface pour une liaison de données, **caractérisé en ce qu'**il présente des moyens pour exécuter un programme d'édition (22), pour produire des lignes de code source de programme (Q), qui ne sont pas exécutable par l'ordinateur (20) seul ,
et **en ce qu'**il présente des moyens pour, par l'intermédiaire de la première et de la deuxième interface (24, 26), permettre une transmission directe entre un support de données (10) portable et un deuxième ordinateur (39), raccordé par l'intermédiaire de la liaison de données (28).

18. Ordinateur selon la revendication 17, **caractérisé en ce qu'**il présente des moyens pour exécuter un protocole SSL.

19. Système de réalisation répartie d'un programme exécutable pour un support de données portable programmable, contenant un support de données portable selon la revendication 9, ainsi qu'un ordinateur selon la revendication 12.

20. Système selon la revendication 19, **caractérisé en ce qu'**il comprend en outre un ordinateur selon la revendication 17.
